**Europäisches Patentamt**

**European Patent Office**

**Office européen des brevets**

(19)

(11) Veröffentlichungsnummer: **0 132 582 B1**

# (12) EUROPÄISCHE PATENTSCHRIFT

(45) Veröffentlichungstag der Patentschrift:
**27.01.88**

(21) Anmeldenummer: **84106974.3**

(22) Anmeldetag: **18.06.84**

(51) Int. Cl.⁴: **B 23 F 5/06**

(54) Verfahren zum Steuern der Hubbewegung einer im Teilwälzverfahren arbeitenden Zahnflankenschleifmaschine.

(30) Priorität: **08.07.83 CH 3760/83**

(43) Veröffentlichungstag der Anmeldung:
**13.02.85 Patentblatt 85/7**

(45) Bekanntmachung des Hinweises auf die Patenterteilung:
**27.01.88 Patentblatt 88/4**

(84) Benannte Vertragsstaaten:
**CH DE FR GB IT LI NL SE**

(56) Entgegenhaltungen:
**CH - A - 525 737**
**CH - A - 529 604**
**DE - A - 1 777 374**
**DE - A - 3 142 384**

(73) Patentinhaber: **Maag-Zahnräder und -Maschinen Aktiengesellschaft, Hardstrasse 219, CH-8023 Zürich (CH)**

(72) Erfinder: **Bloch, Peter, Dr.sc.techn., Sonnenbergstrasse 4, CH-8968 Mutschellen (CH)**
Erfinder: **Wydler, Robert, Dipl.-Ing./ETH, Trottenstrasse 55, CH-8037 Zürich (CH)**

(74) Vertreter: **Travnicek, Richard, Maag Zahnräder & -Maschinen AG PATENTABTEILUNG Neugasse 6, CH-8005 Zürich (CH)**

## Beschreibung

Die Erfindung betrifft ein Verfahren zum Steuern von Grösse und Lage der Hubbewegung einer im Teilwälzverfahren arbeitenden Zahnflankenschleifmaschine beim Schleifen eines schrägverzahnten Zahnrades nach dem Oberbegriff des Anspruchs 1.

Ein solches Verfahren ist in der DE-A 1 777 374 ausgehend von der Tatsache beschrieben, dass bei schrägverzahnten Zahnrädern jeder einzelne Zahn schraubenförmig gekrümmt ist, so dass seine Flankenflächen nicht mehr über ihrer gesamten Länge von einem Schleifkörper bestrichen werden können, der sich in einer Ebene bewegt. Der Schleifkörper ist somit auf einem Teil seines Hubweges ausser Eingriff; dieser Teil ist bei Schrägverzahnungen mit grossem Durchmesser und kleinem Schrägungswinkel klein, wächst aber mit kleiner werdendem Durchmesser und grösser werdendem Schrägungswinkel rasch an. Bei schrägverzahnten Zahnrädern üblicher Grösse beträgt der Leerweg des Schleifkörpers oft den grösseren Teil des gesamten Hubweges und ist oft ein Vielfaches des Eingriffsweges, der relativ klein ist. Daraus ist die Aufgabe abgeleitet worden, die Hubbewegung derart zu steuern, dass sie dem momentanen Eingriffsweg des Schleifkörpers angepasst wird. Diese Aufgabe soll gemäss DE-A 1 777 374 dadurch gelöst werden, dass die Grösse und Lage der Hubbewegung des Stössels in Abhängigkeit des Messwertes von einer der Komponenten der Wälzbewegung der Grösse und augenblicklichen Lage des wirksamen Eingriffsweges des Schleifkörpers an der zu schleifenden Zahnflanke erfolgt. Wie dies im einzelnen geschehen und aus welchem Grund die Messung einer der Komponenten der Wälzbewegung genügen soll, ist jedoch nicht ersichtlich.

Ausserdem ist aus der CH-A 525 737 ein Verfahren und eine Vorrichtung zum Herstellen oder Prüfen schrägverzahnter Evolventen-Stirnräder bekannt, bei welchen das Werkzeug (bzw. jeweils der Taststift) in einem, eine periodische Hin- und Herbewegung entsprechend Kontaktlinien der Zahnflanke ausführenden Hubschlitten sitzt und zusätzlich zwischen Werkstück und Werkzeug eine Wälzbewegung ausgeführt wird. Die Hubbewegung soll dabei höchstens gleich der Länge der maximalen Kontaktstrecke einer Flanke, zuzüglich eines erforderlichen Überlaufes im Bereich des oberen und des unteren Umkehrpunktes der Hubbewegung sein. Ausserdem wird eine Weiterschaltbewegung zwischen Werkzeug und Werkstück zur Parallelverlagerung und/oder parallelen Versetzung des Hubbereiches nach erfolgtem Hub ausgeführt.

In einem weiteren, fakultativen, Verfahrensschritt kann die Hublänge (und offensichtlich dementsprechend die Hubfrequenz) in Abhängigkeit von der Wälzstrecke (S) veränderbar sein, d.h. dabei wird die Hublänge stets so variiert, dass sie gleich der Länge der jeweils mit dem Werkzeug zur Anlage kommenden Berührungslinie zuzüglich des beidseitigen Überlaufes ist.

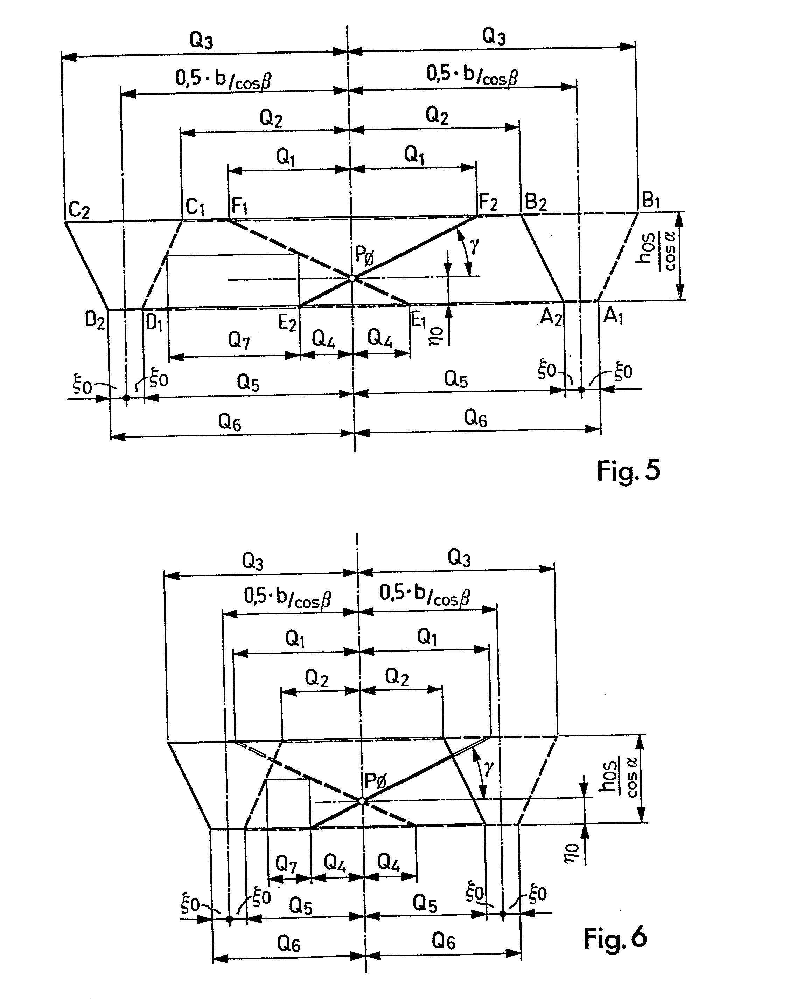

Dies erfolgt durch eine Vergrösserung der Hublänge bezogen auf den unteren Umkehrpunkt der Hubbewegung bis zur maximalen Hublänge, einer anschliessenden Hublagenverschiebung bei konstanter Hublänge und einer nachfolgenden Hublängenverkürzung bei unveränderter Hublage oder einer Hublängenverkürzung samt Hublagenverschiebung (Fig. 5).

Eine andere Steuervorrichtung für den Schleifhub ist aus der CH-A 529 604 bekannt und zeigt eine Steuervorrichtung für den Schleifhub einer nach dem Teilwälzverfahren arbeitenden Zahnflankenschleifmaschine, welche rein mechanisch aus Steuerlinealen (79, 80) und Anschlägen (88, 89) aufgebaut ist; wobei der Schleifhub von einem Minimum am Anfang des Wälzbereiches bis auf ein Maximum in der Mitte desselben zunimmt und dann wieder abnimmt.

Der Erfindung liegt deshalb die Aufgabe zugrunde, ein Verfahren der eingangs beschriebenen Gattung derart weiterzubilden, dass die Hubbewegungen eines Schleifwerkzeuges oder Schleifwerkzeugpaares noch enger an den durch die tatsächlichen Eingriffswege bestimmten Bedarf angepasst werden.

Die Aufgabe ist erfindungsgemäss durch den kennzeichnenden Teil des Anspruchs 1 gelöst.

Vorzugsweise wird das Schleif-Soll-Polygon aus acht Ecken gebildet.

Ausführungsbeispiele der Erfindung werden im folgenden anhand schematischer Zeichnungen beschrieben. Es zeigt:

Fig. 1a ein schrägverzahntes Zahnrad samt zugehöriger Erzeugungs-Bezugszahnstange in Seitenansicht,

Fig. 1b einen Teil des Zahnrades in Draufsicht,

Fig. 2 eine der Fig. 1a entsprechende Seitenansicht mit der Erzeugungs-Bezugszahnstange in einer Symmetriestellung,

Fig. 3 den Normalschnitt III–III in Fig. 2,

Fig. 4 eine perspektivische Ansicht eines Zahnes des Zahnrades,

Fig. 5 geometrische Zusammenhänge von Berechnungsgrössen eines ersten Ausführungsbeispieles der Erzeugungs-Bezugszahnstange,

Fig. 6 die entsprechenden geometrischen Zusammenhänge der Berechnungsgrössen eines zweiten Ausführungsbeispiels der Erzeugungs-Bezugszahnstange,

Fig. 7 eine abgewandelte Einzelheit aus Fig. 5 und 6,

Fig. 8 einen vergrösserten Ausschnitt einer Flanke der Erzeugungs-Bezugszahnstange,

Fig. 9 geometrische Erläuterungen zur Ermittlung eines Hubbegrenzungs-Polygons zum Ausführungsbeispiel gemäss Fig. 5,

Fig. 10 geometrische Erläuterungen zur Ermittlung eines Hubbegrenzungs-Polygons zum Ausführungsbeispiel gemäss Fig. 6;

Fig. 11 ein Diagramm der Schleifhub-Begrenzung gemäss Fig. 9 und

Fig. 12 ein Diagramm der Schleifhub-Begrenzung gemäss Fig. 10.

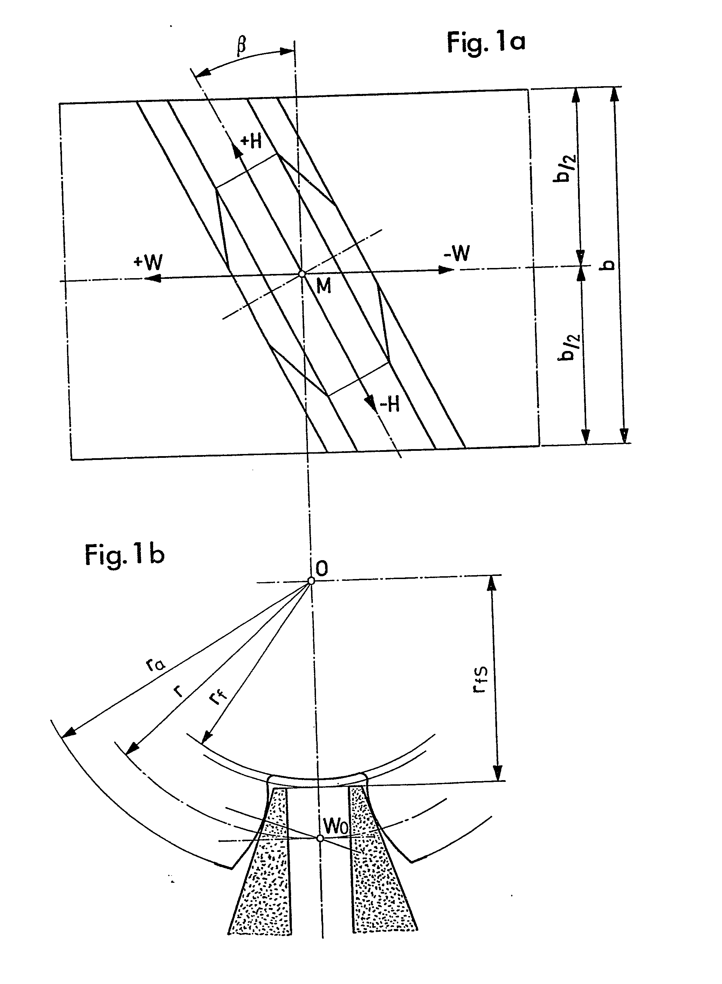

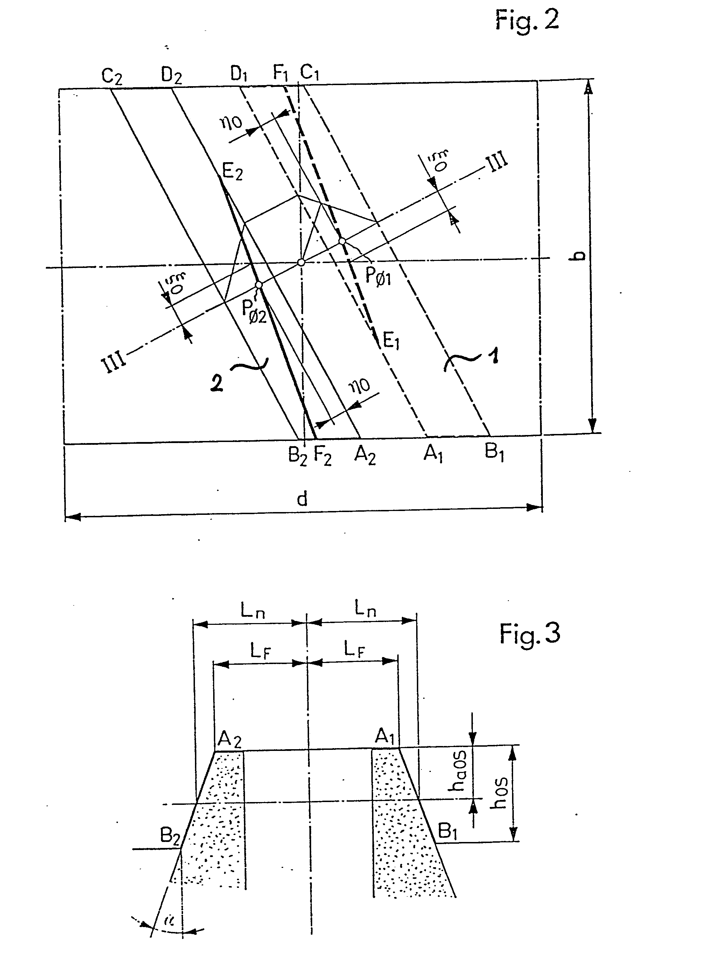

Der in Fig. 1 dargestellten Erzeugungs-Bezugszahnstange ist eine Wälzebene zugeordnet, auf der das zu erzeugende Zahnrad gemäss Fig. 2 mit seinem Teilzylinder abrollbar ist. Nach den bekannten Gesetzen der Evolventen-Geometrie werden dabei am Zahnrad Zahnflanken mit Evolventen-Profil erzeugt. Beim Schleifen mit einem Schleifwerkzeug in Gestalt zweier einfachkegeliger Schleifscheiben oder einer doppelkegelförmigen Schleifscheibe entspricht dessen Umriss in einem zur Bewegungsrichtung des Werkzeugs normalen Schnitt der Erzeugungs-Bezugszahnstange.

In Fig. 1a und 1b ist der Schleifscheiben-Symmetriepunkt M, der Radmittelpunkt O des zu schleifenden Zahnrades und der Wälzpunkt $W_o$ dargestellt. Wenn diese drei Punkte M, O und $W_o$ miteinander fluchten und sich zudem der Schleifscheiben-Symmetriepunkt M in der Mitte der Radbreite b befindet, so liegt eine absolute Symmetriestellung bezüglich Wälzweg (+/−W) und Schleifhub (+/−H) vor. Die folgenden Erläuterungen gelten für das Schleifen mit einem Paar einfachkegeliger Schleifscheiben, gelten aber sinngemäss auch für das Schleifen mit einer einzigen doppelkegeligen Schleifscheibe.

Die absolute Symmetriestellung wird für jedes zu schleifende Zahnrad an der Schleifmaschine dadurch ermittelt, dass der Schleifscheiben-Symmetriepunkt M möglichst genau in die Mitte der Radbreite b positioniert wird, und die Schleifscheiben in dieser Einstellung von einer Seite her in das zu bearbeitende Zahnrad hinein- und auf der anderen Seite herausgewälzt werden. Bei der ersten leichten Berührung (Touchieren) einer Flanke durch eine der Schleifscheiben wird der Wälzweg notiert und ebenso bei der letzten Berührung der gegenüberliegenden Flanke durch die andere Schleifscheibe. Der Mittelwert der beiden Notierungen stellt die Symmetriestellung bezüglich des Wälzweges W dar.

Ausgehend von dieser Symmetriestellung ist in Fig. 2 ein Aufriss der Erzeugungs-Bezugszahnstange dargestellt, wobei die Berührungslinien zwischen zwei Flanken der Bezugszahnstange und je einer Radflanke bei der Wälzweg-Symmetriestellung eingezeichnet sind. Die Durchstosspunkte der durch den Wälzpunkt $W_o$ verlaufenden Normalen auf diesen Bezugszahnstangen-Flanken sind mit $P_{01}$ und $P_{02}$ bezeichnet.

Die Umrandungen der einen Zahnstangenflanke 1 haben die Eckpunkte $A_1$, $B_1$, $C_1$ und $D_1$; dabei ist $A_1$, $D_1$ die Fusslinie der Zahnflanke 1. Die Umrandungen der anderen Zahnstangenflanke 2 haben die Eckpunkte $A_2$, $B_2$, $C_2$ und $D_2$; dabei ist $A_2$, $D_2$ die Fusslinie der Flanke 2.

In Fig. 3 liegen zwei einfachkegelförmige Schleifscheiben an je einer der Zahnstangenflanken 1 und 2 an. Die Verbindungslinie der Kopfpunkte $A_1$ und $A_2$ berührt das Rad im Schleif-Fusskreis mit dem Radius $r_{fs}$ (Fig. 1b), der in der Regel nicht mit dem Fusskreisradius $r_f$ der üblichen Verzahnungsgeometrie übereinstimmt, da nur der elvolventenförmige Teil der Zahnflanke (einschliesslich eines vorwählbaren Sicherheitszuschlages) geschliffen wird. Üblicherweise wird ein kurzer trochoidaler Anschluss an die Zahnfussrundung angefügt. Die Punkte $B_1$ und $B_2$ sind Zahnkopfpunkte der Radflanken. Der halbe Flankenabstand $L_n$ auf der Teillinie des in Fig. 3 dargestellten Zahnes ergibt sich aus den Raddaten, die bei der Erzeugung einer Verzahnung üblicherweise vorgegeben sind.

Zur Bestimmung des Schleifpunktes S in der Erzeugungs-Bezugszahnstangenflanke wird auf die DE-A 3 142 384 verwiesen.

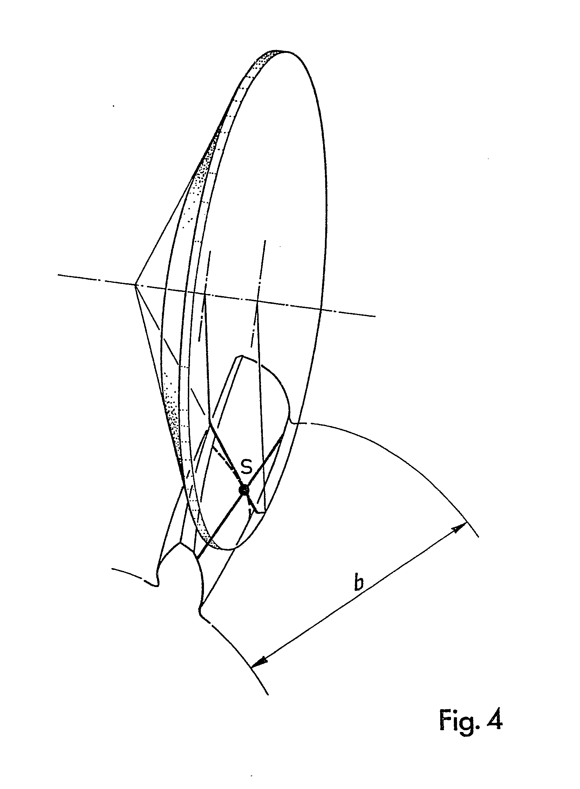

In Fig. 4 ist als volle Linie eine Flankenberührungslinie zwischen einer Bezugszahnstangenflanke und einer Radzahnflanke eines zu bearbeitenden Zahnrades als volle Linie eingezeichnet, und die Berührungslinie zwischen der Bezugszahnstangenflanke und der zugehörigen kegelförmigen Schleifscheibe ist gestrichelt eingezeichnet; der Schnittpunkt dieser beiden Linien ist der Schleifpunkt S.

In jeder Wälzstellung W berührt die Erzeugungs-Bezugszahnstangenflanke die Radflanke in einer bestimmten Flankenberührungslinie. Diese ist eine Erzeugende der Evolventenfläche und ist in Fig. 2 für die Wälz-Symmetriestellung eingezeichnet. Gemäss Fig. 4 ist die Berührungslinie der kegelförmigen Schleifscheibe mit der Bezugszahnstangenflanke eine Gerade, nämlich der Meridian im Normalschnitt durch die Schleifscheibe. Im Kreuzungspunkt dieser beiden Linien befindet sich der momentane Berührungspunkt der Schleifscheibe mit der Radflanke, der Schleifpunkt S.

Für die Berechnung der Schleifhubgrenzen sind folgende Eingabegrössen erforderlich:

| | |
|---|---|
| Modul im Normalschnitt | m |
| Eingriffswinkel | $\alpha$ |
| Zähnezahl | z |
| Schrägungswinkel | $\beta$ |
| Kopfkreisdurchmesser | $d_a$ |
| Schleif-Fusskreisdurchmesser | $d_{fs}$ |
| Zahnbreite | b |
| Ausführungs-Zahnweite | $AW_k$ |

Wenn keine Angabe für $d_{fs}$ vorhanden ist, kann man setzen:

$$d_{fs} = d - 2(h_{oP} - x)\,m - 0{,}1 \cdot m,$$

dabei ist
$h_{oP}$ Zahnkopfhöhe, auf Modul 1 bezogen, im Bezugsprofil,
x Profilverschiebungsfaktor.
Hilfsgrössen zur Evolventengeometrie:

$$d = \frac{z \cdot m}{\cos\beta}$$

$$\tan\alpha_t = \frac{\tan\alpha}{\cos\beta}$$

$$d_b = d \cdot \cos\alpha_t$$

$$\cos\alpha_a = \frac{d_b}{d_a}$$

$$\tan\gamma = \sin\alpha \cdot \tan\beta$$

$$L_n = 0{,}5\left[(k+1)\cdot\pi\cdot m - \frac{AW_k}{\cos\alpha} + z\cdot m\cdot \operatorname{inv}\alpha_t\right]$$

$$h_{OS} = 0{,}5\left[d_b\,(\tan\alpha_a - \tan\alpha_t)\sin\alpha_t + d - d_{fS}\right]$$

$$h_{aOS} = r - r_{fS}$$

## Schleifmaschinen–Einstellgrösse $L_F = L_n - (r - r_{fS})\tan\alpha$

Geometrisch geht es nun darum, die Flanken der Erzeugungs-Bezugszahnstange in Draufsicht so darzustellen, dass bei Überlagerung von linker und rechter Flanke die Bezugspunkte $P_{01}$ und $P_{02}$ zusammenfallen. In der Wälzweg-Symmetriestellung gemäss Fig. 2 kann die Flankenberührungslinie in ihrer vollen Ausdehnung innerhalb des Umrisses $A_1$, $B_1$, $C_1$, $D_1$ bzw. $A_2$, $B_2$, $C_2$, $D_2$ der Zahnflanke liegen, wie dies in Fig. 5 gezeigt ist, oder sie kann, wie aus Fig. 6 ersichtlich, aus der Stirnfläche austreten. Es sind also grundsätzlich – für die Systematik der Berechnung der Schleifbegrenzung – zwei verschiedene Fälle zu betrachten. Für gegebene geometrische Verzahnungsdaten kann dies mit der Zahnbreite b in Zusammenhang gebracht werden.

Der Grenzfall $Q_1 = Q_2$ gehört einer bestimmten Zahnbreite zugeordnet, die man mit kritischer Zahnbreite b' bezeichnet. Wenn die Zahnbreite b grösser als die Zahnbreite b' ist, so gilt die in Fig. 5 gewählte Darstellung; wenn sie kleiner ist, gilt die in Fig. 6 gewählte Darstellung.

Die Formel zur Berechnung der kritischen Zahnbreite b' lautet:

$$b' = 2\cdot\cos\beta\left(\frac{\dfrac{h_{OS}}{\cos\alpha}-\eta_0}{\tan\gamma} + \xi_0 + h_{OS}\cdot\frac{\tan\gamma}{\tan\alpha}\right)$$

Zur Ermittlung der Lage der Flankenberührungslinien in der Flanke der Erzeugungs-Bezugszahnstange, ausgehend von der Wälzweg-Symmetriestellung $(W = O)$ sind im Zusammenhang mit Fig. 5 und 6 folgende Hilfsgrössen notwendig:

$$\xi_0 = L_F \cdot \tan\beta$$

$$\eta_0 = (h_{aOS} - L_F \cdot \tan\alpha)\cos\alpha$$

$$Q_1 = \frac{\dfrac{h_{OS}}{\cos\alpha}-\eta_0}{\tan\gamma}$$

$$Q_2 = 0{,}5\,\frac{b}{\cos\beta} - \xi_0 - \frac{h_{OS}}{\cos\alpha}\cdot\tan\gamma$$

$$Q_3 = 0.5 \frac{b}{\cos\beta} + \xi 0 + \frac{h_{0S}}{\cos\alpha} \cdot \tan\gamma$$

$$Q_4 = \frac{\eta 0}{\tan\gamma}$$

$$Q_5 = 0.5 \cdot \frac{b}{\cos\beta} - \xi 0$$

$$Q_6 = 0.5 \cdot \frac{b}{\cos\beta} + \xi 0$$

$$Q_7 = Q_5 - 2\eta 0 \cdot \tan\gamma - Q_4$$

$\gamma$ = Winkel zwischen Flankenberührungs- und Fusslinie

Dabei ist, jeweils bezüglich des Schleifens der Verzahnung,

$h_{aOS}$ = Werkzeugzahnkopfhöhe
$h_{OS}$ = Werkzeugzahnhöhe.

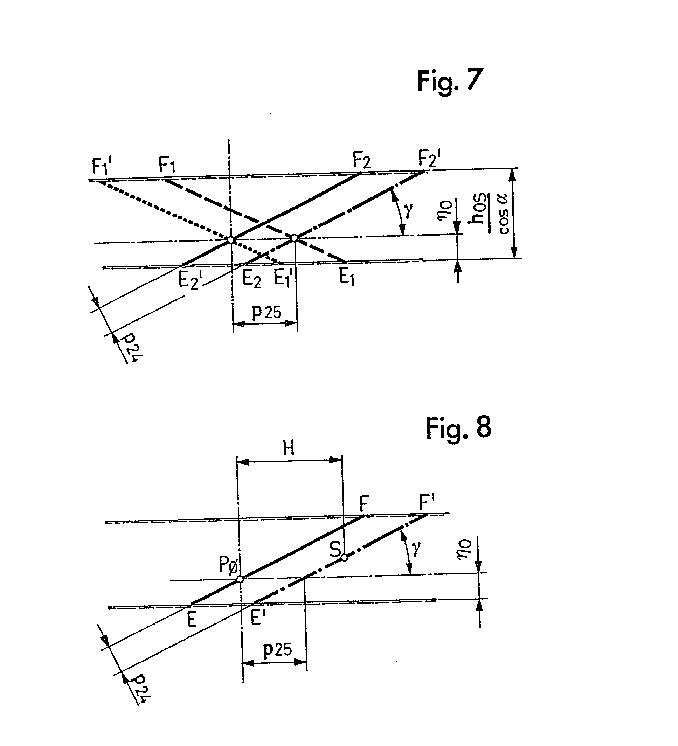

Ausgehend von der statischen Ermittlung der geometrischen Grössen muss nun die Verschiebung der Flankenberührungslinie aus der Erzeugungs-Zahnstangenflanke beim Wälzen eines zu bearbeitenden Zahnrades gefunden werden. Die Flankenberührungslinie $E_1$, $F_1$ der Disposition gemäss Fig. 2 verschiebt sich beim Wälzen des Rades in positiver Richtung gemäss Fig. 1 nach links, auf die Flanke $A_1$, $B_1$, $C_1$, $D_1$; die Flankenberührungslinie $E_2$, $F_2$ auf die Flanke $A_2$, $B_2$, $C_2$, $D_2$ verschiebt sich nach rechts. Wenn bei Übereinstimmung der beiden Punkte $P_{01}$ und $P_{02}$ die zweite Flanke auf die erste umgelagert wird, kann man annehmen, dass der Schnittpunkt der beiden Flankenberührungslinien sich parallel zur Fusslinie bewegt. Dies ist in Fig. 7 als Ergänzung der Fig. 5 und 6 gezeigt. Für die Wälzwegrichtung ist dabei das positive Vorzeichen +W gewählt. Die Verschiebungsgrössen nach Massgabe des Wälzweges sind die algebraisch zu behandelnden Grössen $p_{24}$ und $p_{25}$:

$$p_{24} = W \cdot \sin\alpha_t$$

$$p_{25} = W \cdot \frac{\sin\alpha_t}{\sin\gamma}$$

Wie erwähnt, wird in Fig. 4 anschaulich und in Fig. 8 schematisch die Ermittlung des Schleifpunktes der kegeligen Schleifscheibe in bezug auf die Erzeugungs-Bezugszahnstangenflanke gezeigt. Dabei befindet sich der Schleifpunkt S auf der verschobenen Flankenberührungslinie E', F' im Abstand des Schleifhubes H von der Senkrechten durch $P_0$ auf die Fusslinie.

Es ist nun eine Systematik zur Ermittlung der Schleifhubbegrenzung in Funktion des Wälzweges W und des Schleifhubes H zu entwickeln. Da die sich einer rechten Flanke zuordnen lassen und solchen, die sich einer linken Flanke zuordnen lassen. Zusätzlich zu beachten sind die beiden möglichen Gangrichtungsarten des zu bearbeitenden Rades, das rechts- oder linksgängig sein kann. Ferner ist zu unterscheiden, ob die Zahnbreite b grösser oder kleiner als die kritische Zahnbreite b' ist. Aus diesen Unterscheidungen ergeben sich die folgenden vier Berechnungsfälle:

|                                                                          | b>b'        | b<b'        |
| ------------------------------------------------------------------------ | ----------- | ----------- |
| Linke Schleifscheibe und linksgängiges Rad<br>Rechte Schleifscheibe und rechtsgängiges Rad | Fall<br>I   | Fall<br>II  |
| Rechte Schleifscheibe und linksgängiges Rad<br>Linke Schleifscheibe und rechtsgängiges Rad | Fall<br>III | Fall<br>IV  |

Bezüglich rechter und linker Schleifscheibe wird hier von einem vor der Schleifmaschine stehenden Betrachter ausgegangen.

Der Fall I bezieht sich in Fig. 2 auf den Flankenumriss $A_1$, $B_1$, $C_1$, $D_1$, und der Fall II betrifft den Flankenumriss $A_2$, $B_2$, $C_2$, $D_2$.

Von der Mittelstellung nach Fig. 1 aus sind die Wälzweg- und Schleifhubverhältnisse bezüglich der Hubbegrenzung punktsymmetrisch, wenn die W- und H-Werte algebraisch verarbeitet und die entsprechenden Formeln gemäss Plus- und Minusregeln adaptiert sind. In den Fällen I und II ist das Vorzeichen von W und H positiv. Die Fälle III und IV können mit den gleichen Formeln wie I und II berechnet werden, wenn man anstatt von +H und −H und anstatt +W nun −W in die berechnung einsetzt. Was obere Schleifpunktbegrenzung war, wird dann jeweils zur unteren Schleifpunktbegrenzung und umgekehrt.

Das Fazit aus diesen Berechnungen ist die Tatsache, dass beim Arbeiten mit kegeliger Schleifscheibe sich ein polygonartiger Verlauf der Hubbegrenzung in Funktion des Wälzweges ergibt. Die Polygonecken sind die Berechnungsstützpunkte, die aber bei der Ausführung an der Zahnflankenschleifmaschine praktisch nicht erreicht werden. Die Polygoneckpunkte bilden aber das Gerippe für die Ermittlung des Hubbegrenzungsdiagramms.

In der praktischen Anwendung kommen noch gewählte Überlaufbeträge zum Hubbetrag der entsprechenden Polygoneckpunkte.

Polygoneckpunkte der Schleifhubbegrenzungswerte werden für die Fälle I und II nach den Tabellen A und B berechnet.

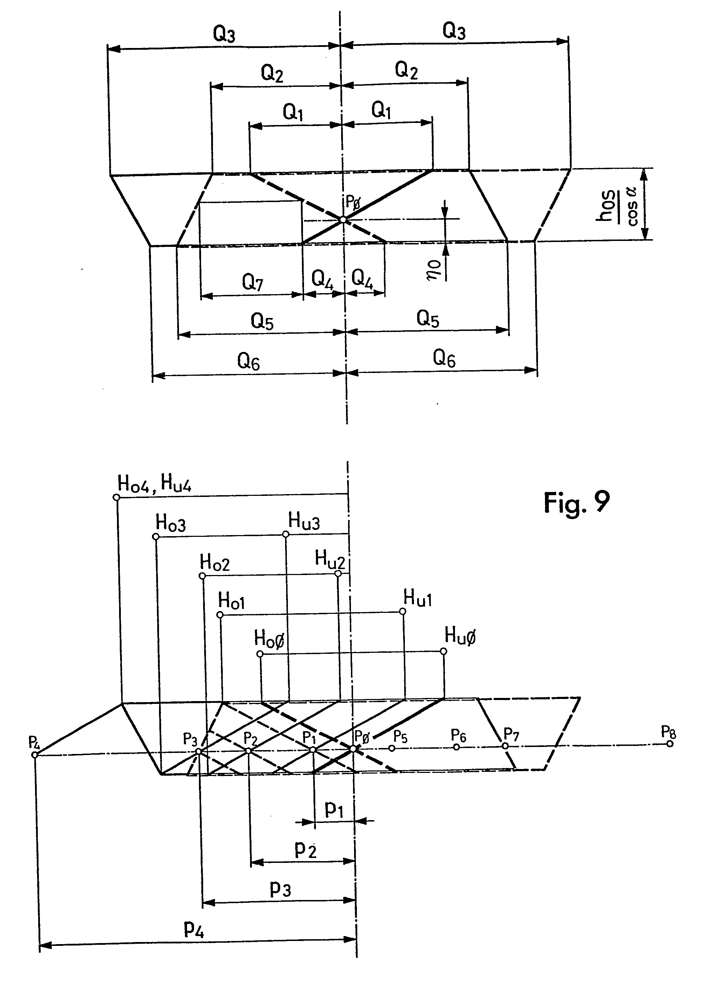

In Fig. 9 ist die Draufsicht auf die Flanke $A_1$, $B_1$, $C_1$, $D_1$ nach Fig. 2 mit umgeklappt gestrichelt darüber gezeichneter Flanke $A_2$, $B_2$, $C_2$, $D_2$ gezeigt. Der positive Schleifhub H geht dabei parallel zur Fusslinie nach links, und der Wälzweg W wächst positiv entsprechend der Reihenfolge der Kreuzungspunkte von $P_0$ zu $P_4$. Die Abstände der Kreuzungspunkte von der Mittellinie sind mit $p_1$ bis $p_4$ bezeichnet. Den negativen Wälzwegen entsprechen die Punkte $P_5$ bis $P_8$. Alle diese Punkte entsprechen Stützpunkten des Verlaufs der Schleifhubbegrenzung in Funktion ihres Wälzweges. Die Formeln für die Punkte $P_5$ bis $P_8$ leiten sich wiederum von den Formeln der Punkte $P_1$ bis $P_4$ ab, indem für $p_5$ bis $p_8$ der negative Betrag von $p_1$ bis $p_4$ eingesetzt wird und für die oberen Hubbegrenzungswerte $H_{05}$ bis $H_{08}$ jeweils die negativen Werte von $H_{u1}$ bis $H_{u4}$ genommen wird.

Das für den Fall I Gesagte gilt auch für den Fall II. Hier hängt die Reihenfolge der Berechnungspunkte $P_1$, $P_2$ bzw. $P_5$, $P_6$ nur vom Dispositionskriterium

$$(Q_2-Q_1) \begin{array}{c} > \\ < \end{array} \text{oder } Q_7$$

ab.

Fig. 9 zeigt die Ermittlung der Eckpunkte des Hubbegrenzungspolygons über die charakteristischen Stellungen der Flankenberührungslinien bei Annahme der überkritischen Zahnbreite b grösser als b'.

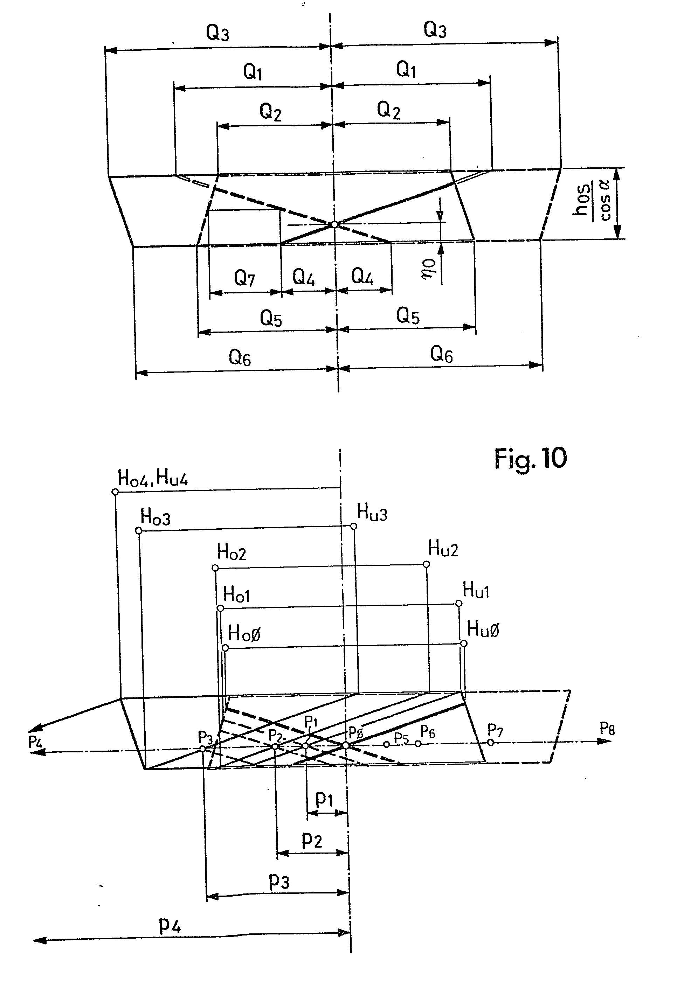

Fig. 10 zeigt das entsprechende Beispiel für die Ermittlung der Stützpunkte des Hubbegrenzungspolygons über die charakteristischen Stellungen der Flankenberührungslinien für die unterkritische Zahnbreite b kleiner als b'.

Nach der Berechnung der Polygoneckpunkte für diese verschiedenen Fälle wird das eigentliche Hubbegrenzungspolygon durch linearisierte Funktionen zwischen den jeweils benachbarten Polygoneckpunkten gebildet, d.h. zwischen jeweils zwei exakt bestimmten Eckpunkten wird eine linearisierte Funktion eingeschoben, die dann als definitive Hubgrenze angesehen wird. Das Einschieben dieser definierten linearisierten Funktion zwischen je zwei benachbarten Eckpunkten bringt eine ganze Reihe von Vorteilen mit sich, die bei der Messung an der Maschine ausnutzbar sind. Bei der Bearbeitung einer Zahnflanke wird in kurzen Zeitabständen, mindestens einmal je Hubzyklus, der Wälzweg und die zugehörige Hubstellung an der Maschine gemessen und dann die zugehörige Position des Schleifpunktes S im Eingriffsfeld berechnet. Von diesem Eingriffsfeld ausgehend kann jeweils der Abstand zu der linearisierten Funktion ermittelt werden. Wenn die linearisierte Funktion die Hubgrenze darstellt, so kann jeweils der Abstand des aktuellen Schleifpunktes zur Hubgrenze, und zwar zur nächstfolgenden Hubgrenze, bestimmt werden, wenn man die Überlegungen der Hubbewegungsrichtung miteinbezieht.

Aufgrund dieser Mess- und Rechenwerte ist es dann weiterhin möglich, die Geschwindigkeit der Schleifscheibe so zu verzögern oder zu beschleunigen, dass jeweils im grösstmöglichen Teil der Schleiflinie über die Zahnflanke mit Höchstgeschwindigkeit geschliffen wird und die Geschwindigkeit so spät vermindert wird, und dies mit grösstmöglicher Verzögerung, dass an der Hubgrenze eine Bewegungsrichtungsumkehr eintritt.

Tabelle A: Berechnung des Hubbegrenzungspolygons für die überkritische Zahnbreite b > b′
Eingerahmte Werte = Stützpunkte

| Punkt | p | W | $H_o$ | $H_u$ |
|---|---|---|---|---|
| $P_{\emptyset}$ | $p_{\emptyset} = \emptyset$ | $W_{\emptyset} = \emptyset$ | $H_{o\emptyset} = Q_2 + (Q_1 - Q_2) \cdot \sin^2 \gamma$ | $H_{u\emptyset} = -\left[Q_2 + (Q_1 - Q_2) \sin^2 \gamma\right]$ |
| $P_1$ resp. $P_2$ | $p_1 = (Q_1 - Q_2)$ | $W_1 = p_1 \cdot \dfrac{\sin \gamma}{\sin \alpha_t}$ | $H_{o1} = \left[Q_2 + 2(Q_1 - Q_2)\sin^2 \gamma\right]$ | $H_{u1} = -Q_2$ |
| $P_2$ resp. $P_1$ | $p_2 = Q_7$ | $W_2 = p_2 \cdot \dfrac{\sin \gamma}{\sin \alpha_t}$ | $H_{o2} = (Q_4 + Q_7)$ | $H_{u2} = (Q_7 - Q_1)$ |
| $P_3$ | $p_3 = (Q_6 - Q_4)$ | $W_3 = p_3 \cdot \dfrac{\sin \gamma}{\sin \alpha_t}$ | $H_{o3} = Q_6$ | $H_{u3} = (Q_6 - Q_4 - Q_1)$ |
| $P_4$ | $p_4 = (Q_3 + Q_1)$ | $W_4 = p_4 \cdot \dfrac{\sin \gamma}{\sin \alpha_t}$ | $H_{o4} = Q_3$ | $H_{u4} = Q_3$ |
| $P_5$ resp. $P_6$ | $p_5 = -(Q_1 - Q_2)$ | $W_5 = p_5 \cdot \dfrac{\sin \gamma}{\sin \alpha_t}$ | $H_{o5} = Q_2$ | $H_{u5} = -\left[Q_2 + 2(Q_1 - Q_2) \sin^2 \gamma\right]$ |
| $P_6$ resp. $P_5$ | $p_6 = -Q_7$ | $W_6 = p_6 \cdot \dfrac{\sin \gamma}{\sin \alpha_t}$ | $H_{o6} = -(Q_7 - Q_1)$ | $H_{u6} = -(Q_4 + Q_7)$ |
| $P_7$ | $p_7 = -(Q_6 - Q_4)$ | $W_7 = p_7 \cdot \dfrac{\sin \gamma}{\sin \alpha_t}$ | $H_{o7} = -(Q_6 - Q_4 - Q_1)$ | $H_{u7} = -Q_6$ |
| $P_8$ | $p_8 = -(Q_3 + Q_1)$ | $W_8 = p_8 \cdot \dfrac{\sin \gamma}{\sin \alpha_t}$ | $H_{o8} = -Q_3$ | $H_{u8} = -Q_3$ |

Tabelle B: Berechnung des Hubbegrenzungspolygons für die unterkritische Zahnbreite $b < b'$
Eingerahmte Werte = Stützpunkte

| Punkt | $p$ | $W$ | $H_o$ | $H_u$ |
|---|---|---|---|---|
| $P_\emptyset$ | $p_\emptyset = \emptyset$ | $W_\emptyset = \emptyset$ | $H_{o\emptyset} = Q_1$ | $H_{u\emptyset} = -Q_1$ |
| $P_1$ | $p_1 = (Q_2 - Q_1)$ | $W_1 = p_1 \cdot \dfrac{\sin\gamma}{\sin\alpha_t}$ | $H_{o1} = Q_2$ | $H_{u1} = (Q_2 - 2Q_1)$ |
| $P_2$ | $p_2 = Q_7$ | $W_2 = p_2 \cdot \dfrac{\sin\gamma}{\sin\alpha_t}$ | $H_{o2} = (Q_4 + Q_7)$ | $H_{u2} = (Q_7 - Q_1)$ |
| $P_3$ | $p_3 = (Q_6 - Q_4)$ | $W_3 = p_3 \cdot \dfrac{\sin\gamma}{\sin\alpha_t}$ | $H_{o3} = Q_6$ | $H_{u3} = (Q_6 - Q_4 - Q_1)$ |
| $P_4$ | $p_4 = (Q_3 + Q_1)$ | $W_4 = p_4 \cdot \dfrac{\sin\gamma}{\sin\alpha_t}$ | $H_{o4} = Q_3$ | $H_{u4} = Q_3$ |
| $P_5$ | $p_5 = -(Q_2 - Q_1)$ | $W_5 = p_5 \cdot \dfrac{\sin\gamma}{\sin\alpha_t}$ | $H_{o5} = -(Q_2 - 2Q_1)$ | $H_{u5} = -Q_2$ |
| $P_6$ | $p_6 = -Q_7$ | $W_6 = p_6 \cdot \dfrac{\sin\gamma}{\sin\alpha_t}$ | $H_{o6} = -(Q_7 - Q_1)$ | $H_{u6} = -(Q_4 + Q_7)$ |
| $P_7$ | $p_7 = -(Q_6 - Q_4)$ | $W_7 = p_7 \cdot \dfrac{\sin\gamma}{\sin\alpha_t}$ | $H_{o7} = -(Q_6 - Q_4 - Q_1)$ | $H_{u7} = -Q_6$ |
| $P_8$ | $p_8 = -(Q_3 + Q_1)$ | $W_8 = p_8 \cdot \dfrac{\sin\gamma}{\sin\alpha_t}$ | $H_{o8} = -Q_3$ | $H_{u8} = -Q_3$ |

Das angesprochene Hubbegrenzungspolygon kann ausgehend von den Stützpunkten, wie sie auf den Seiten 16 und 17 dargestellt sind, durch ein System von acht linearen Gleichungen beschrieben werden, weil sie einen gemeinsamen Parameter haben, nämlich den Wälzweg. Für jeden Wälzweg ergibt sich damit ein oberer und unterer Hubbegrenzungswert. Aus dem Wert des momentanen Wälzweges lässt sich der Abstand des momentanen Schleifhubes von der oberen respektive unteren Schleifhub-Begrenzung durch einfache mathematische Überlegungen bestimmen. In Praxis wird dies über ein EDV-Programm zur Bestimmung eines Abstandes eines Punktes von einer Geraden realisiert. Im weiteren wird in Praxis ein funktioneller Linienzug für die obere Hubbegrenzung und ein solcher für die untere Hubbegrenzung erstellt. Jede dieser Linien hat fünf eigentliche Stützpunkte, welche in Tabelle A und Tabelle B durch Umrahmung markiert sind. Aus Gründen der Vereinfachung der rechnerischen Systematik ist in den Tabellen C und D

der Punkt $P_0$ dazugenommen worden, obwohl er kein echter Stützpunkt ist. Die Verbindung zweier beliebiger Stützpunkte $P_n$ und $P_{(n+1)}$ durch eine lineare Funktion lässt sich nach untenstehendem allgemeinen Schema bewerkstelligen:

$$H = \frac{H_{(n+1)} - H_n}{W_{(n+1)} - W_n} \cdot W + \frac{H_n \cdot W_{(n+1)} - H_{(n+1)} \cdot W_n}{W_{(n+1)} - W_n}$$

Die zuvor zitierten Überlegungen sind bei der Erstellung der Tabellen C und D konsequent eingehalten worden. Zur Erhaltung der Transparenz des Verfahrens sind hingegen nicht alle Vereinfachungen der Formeln vollzogen worden, die nachfolgenden formalen Umwandlungen sind jedoch aufgrund der zweckmässigen Gestaltung der mathematischen Ausdrücke vorgenommen worden:

$$\frac{(Q_4 + Q_7) - Q_2}{Q_7 - (Q_2 - Q_1)} = \sin^2 \gamma$$

$$\frac{Q_3 - Q_6}{(Q_3 + Q_1) - (Q_6 - Q_4)} = \sin^2 \gamma$$

$$\frac{(Q_4 + Q_7) - \left[Q_2 + (Q_1 - Q_2) \cdot \sin^2 \gamma\right]}{Q_7} = \sin^2 \gamma$$

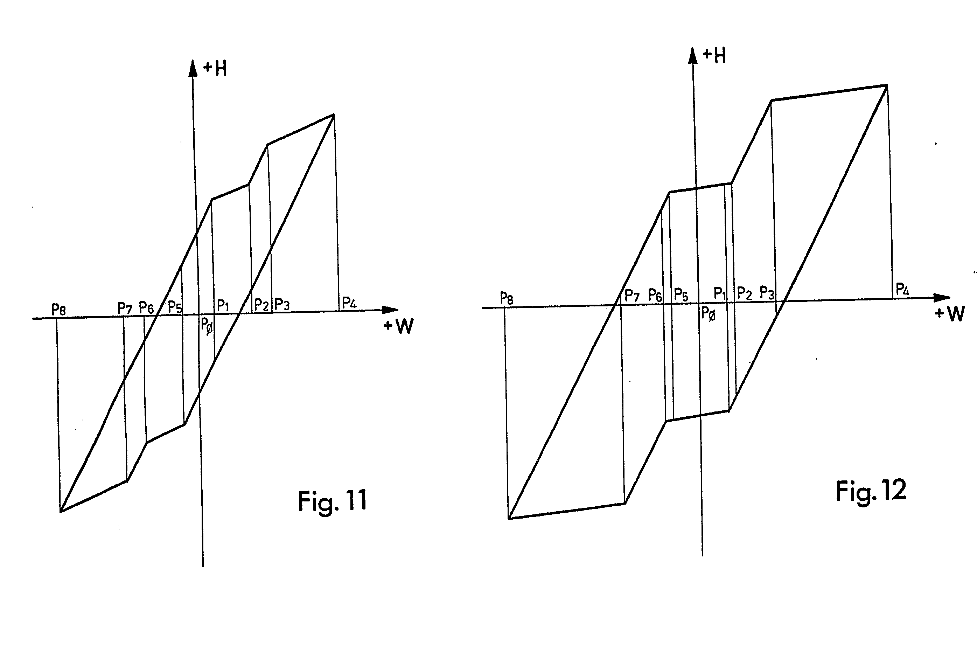

Tabelle C: Digitale Steuerung der oberen und unteren Schleifhubbegrenzung $H_o$ und $H_u$ durch abschnittweise lineare Funktionen $H = f(W)$
Fall $b > b'$ nach Fig. 11

| Abschn. | Obere Schleifhubbegrenzung $H_o$ | Abschn. | Untere Schleifhubbegrenzung $H_u$ |
|---|---|---|---|
| $P_0 - P_1$ | $H_o = \dfrac{Q_2 - Q_1}{Q_2 - Q_1} \cdot \dfrac{\sin\alpha_t}{\sin\gamma} \cdot W + \dfrac{Q_1 \cdot (Q_2 - Q_1)}{Q_2 - Q_1}$ $= \dfrac{\sin\alpha_t}{\sin\gamma} \cdot W + Q_1$ | $P_0 + P_4$ | $H_u = \dfrac{Q_3 + Q_1}{Q_3 + Q_1} \cdot \dfrac{\sin\alpha_t}{\sin\gamma} \cdot W + \dfrac{-Q_1 (Q_3 + Q_1)}{Q_3 + Q_1}$ $= \dfrac{\sin\alpha_t}{\sin\gamma} \cdot W - Q_1$ |
| $P_1 \div P_2$ | $H_o = \dfrac{(Q_4 + Q_7) - Q_2}{Q_7 - (Q_2 - Q_1)} \cdot \dfrac{\sin\alpha_t}{\sin\gamma} \cdot W + \dfrac{Q_2 \cdot Q_7 - (Q_4 + Q_7)(Q_2 - Q_1)}{Q_7 - (Q_2 - Q_1)}$ $= \sin^2\gamma \cdot \dfrac{\sin\alpha_t}{\sin\gamma} \cdot W + \dfrac{Q_2 \cdot Q_7 - (Q_4 + Q_7)(Q_2 - Q_1)}{Q_7 - (Q_2 - Q_1)}$ | $P_0 + P_5$ | $H_u = \dfrac{-Q_2 + Q_1}{-(Q_2 - Q_1)} \cdot \dfrac{\sin\alpha_t}{\sin\gamma} \cdot W + \dfrac{Q_1 (Q_2 - Q_1)}{-(Q_2 - Q_1)}$ $= \dfrac{\sin\alpha_t}{\sin\gamma} \cdot W - Q_1$ |
| $P_2 \div P_3$ | $H_o = \dfrac{Q_6 - (Q_4 + Q_7)}{(Q_6 - Q_4) - Q_7} \cdot \dfrac{\sin\alpha_t}{\sin\gamma} \cdot W + \dfrac{(Q_4 + Q_7)(Q_6 - Q_4) - Q_6 \cdot Q_7}{(Q_6 - Q_4) - Q_7}$ $= \sin^2\gamma \cdot \dfrac{\sin\alpha_t}{\sin\gamma} \cdot W + \dfrac{(Q_4 + Q_7)(Q_6 - Q_4) - Q_6 \cdot Q_7}{(Q_6 - Q_4) - Q_7}$ | $P_5 \div P_6$ | $H_u = \dfrac{-(Q_4 + Q_7) + Q_2}{-Q_7 + (Q_2 - Q_1)} \cdot \dfrac{\sin\alpha_t}{\sin\gamma} \cdot W + \dfrac{Q_2 \cdot Q_7 - (Q_4 + Q_7)(Q_2 - Q_1)}{-Q_7 + (Q_2 - Q_1)}$ $= \sin^2\gamma \cdot \dfrac{\sin\alpha_t}{\sin\gamma} \cdot W + \dfrac{Q_2 \cdot Q_7 - (Q_4 + Q_7)(Q_2 - Q_1)}{-Q_7 + (Q_2 - Q_1)}$ |
| $P_3 \div P_4$ | $H_o = \dfrac{Q_3 - Q_6}{(Q_3 + Q_1) - (Q_6 - Q_4)} \cdot \dfrac{\sin\alpha_t}{\sin\gamma} \cdot W + \dfrac{Q_6 (Q_3 + Q_1) - Q_3 (Q_6 - Q_4)}{(Q_3 + Q_1) - (Q_6 - Q_4)}$ $= \sin^2\gamma \cdot \dfrac{\sin\alpha_t}{\sin\gamma} \cdot W + \dfrac{Q_6 (Q_3 + Q_1) - Q_3 (Q_6 - Q_4)}{(Q_3 + Q_1) - (Q_6 - Q_4)}$ | $P_6 \div P_7$ | $H_u = \dfrac{-Q_6 + (Q_4 + Q_7)}{-(Q_6 - Q_4) + Q_7} \cdot \dfrac{\sin\alpha_t}{\sin\gamma} \cdot W + \dfrac{(Q_4 + Q_7)(Q_6 - Q_4) - Q_6 \cdot Q_7}{-(Q_6 - Q_4) + Q_7}$ $= \sin^2\gamma \cdot \dfrac{\sin\alpha_t}{\sin\gamma} \cdot W + \dfrac{(Q_4 + Q_7)(Q_6 - Q_4) - Q_6 \cdot Q_7}{-(Q_6 - Q_4) + Q_7}$ |
| $P_4 \div P_8$ | $H_o = \dfrac{-Q_3 - Q_1}{-(Q_3 + Q_1)} \cdot \dfrac{\sin\alpha_t}{\sin\gamma} \cdot W + \dfrac{-Q_1 (Q_3 + Q_1)}{-(Q_3 + Q_1)}$ $= \dfrac{\sin\alpha_t}{\sin\gamma} \cdot W + Q_1$ | $P_7 \div P_8$ | $H_u = \dfrac{-Q_3 + Q_6}{-(Q_3 + Q_1) + (Q_6 - Q_4)} \cdot \dfrac{\sin\alpha_t}{\sin\gamma} \cdot W + \dfrac{Q_6 (Q_3 + Q_1) - Q_3 (Q_6 - Q_4)}{-(Q_3 + Q_1) + (Q_6 - Q_4)}$ $= \sin^2\gamma \cdot \dfrac{\sin\alpha_t}{\sin\gamma} \cdot W + \dfrac{Q_6 (Q_3 + Q_1) - Q_3 (Q_6 - Q_4)}{-(Q_3 + Q_1) + (Q_6 - Q_4)}$ |

Tabelle D: Digitale Steuerung der oberen und unteren Schleifhubbegrenzung $H_o$ Und $H_u$ durch abschnittweise lineare Funktionen $H = f(W)$

Fall $b > b'$ nach Fig. 12

| Abschn. | Obere Schleifhubbegrenzung $H_o$ | Abschn. | Untere Schleifhubbegrenzung $H_u$ |
|---|---|---|---|
| $P_1 \div P_2$ | $H_o = \dfrac{(Q_4+Q_7)-[Q_2+(Q_1-Q_2)\sin^2\gamma]}{Q_7} \cdot \dfrac{\sin\alpha_t}{\sin\gamma} \cdot W + \left[Q_2+(Q_1-Q_2)\sin^2\gamma\right]$ <br> $= \sin^2\gamma \cdot \dfrac{\sin\alpha_t}{\sin\gamma} \cdot W + \left[Q_2+(Q_1-Q_2)\cdot\sin^2\gamma\right]$ | $P_0 \div P_1$ | $H_u = \dfrac{-Q_2+[Q_2+(Q_1-Q_2)\sin^2\gamma]}{(Q_1-Q_2)} \cdot \dfrac{\sin\alpha_t}{\sin\gamma} \cdot W + \dfrac{-[Q_2+(Q_1-Q_2)\sin^2\gamma](Q_1-Q_2)}{(Q_1-Q_2)}$ <br> $= \sin^2\gamma \cdot \dfrac{\sin\alpha_t}{\sin\gamma} \cdot W - \left[Q_2+(Q_1-Q_2)\cdot\sin^2\gamma\right]$ |
| $P_2 \div P_3$ | $H_o = \dfrac{Q_6-(Q_4+Q_7)}{(Q_6-Q_4)-Q_7} \cdot \dfrac{\sin\alpha_t}{\sin\gamma} \cdot W + \dfrac{(Q_4+Q_7)(Q_6-Q_4)-Q_6\cdot Q_7}{(Q_6-Q_4)-Q_7}$ <br> $= \dfrac{\sin\alpha_t}{\sin\gamma} \cdot W + \dfrac{(Q_4+Q_7)(Q_6-Q_4)-Q_6\cdot Q_7}{(Q_6-Q_4)-Q_7}$ | $P_1 \div P_4$ | $H_u = \dfrac{Q_3+Q_2}{(Q_3+Q_1)-(Q_1-Q_2)} \cdot \dfrac{\sin\alpha_t}{\sin\gamma} \cdot W + \dfrac{-Q_2(Q_3+Q_1)-Q_3(Q_1-Q_2)}{(Q_3+Q_1)-(Q_1-Q_2)}$ <br> $= \dfrac{-Q_2(Q_3+Q_1)-Q_3(Q_1-Q_2)}{Q_3+Q_2}$ |
| $P_3 \div P_4$ | $H_o = \dfrac{Q_3-Q_6}{(Q_3+Q_1)-(Q_6-Q_4)} \cdot \dfrac{\sin\alpha_t}{\sin\gamma} \cdot W + \dfrac{Q_6\cdot(Q_3+Q_1)-Q_3\cdot(Q_6-Q_4)}{(Q_3+Q_1)-(Q_6-Q_4)}$ <br> $= \dfrac{\sin\alpha_t}{\sin\gamma} \cdot W + \dfrac{Q_6\cdot(Q_3+Q_1)-Q_3\cdot(Q_6-Q_4)}{(Q_3+Q_1)-(Q_6-Q_4)}$ | $P_0 \div P_6$ | $H_u = \dfrac{-(Q_4+Q_7)+[Q_2+(Q_1-Q_2)\sin^2\gamma]}{Q_7} \cdot \dfrac{\sin\alpha_t}{\sin\gamma} \cdot W - \left[Q_2+(Q_1-Q_2)\cdot\sin^2\gamma\right]$ <br> $= \sin^2\gamma \cdot \dfrac{\sin\alpha_t}{\sin\gamma} \cdot W - \left[Q_2+(Q_1-Q_2)\cdot\sin^2\gamma\right]$ |
| $P_4 \div P_5$ | $H_o = \dfrac{Q_2-[Q_2+(Q_1-Q_2)\sin^2\gamma]}{-(Q_1-Q_2)} \cdot \dfrac{\sin\alpha_t}{\sin\gamma} \cdot W + \left[Q_2+(Q_1-Q_2)\sin^2\gamma\right]$ <br> $= \sin^2\gamma \cdot \dfrac{\sin\alpha_t}{\sin\gamma} \cdot W + \left[Q_2+(Q_1-Q_2)\sin^2\gamma\right]$ | $P_6 \div P_7$ | $H_u = \dfrac{-Q_6+(Q_4+Q_7)}{(Q_6-Q_4)+Q_7} \cdot \dfrac{\sin\alpha_t}{\sin\gamma} \cdot W + \dfrac{(Q_4+Q_7)(Q_6-Q_4)-Q_6\cdot Q_7}{-(Q_6-Q_4)+Q_7}$ <br> $= \dfrac{\sin\alpha_t}{\sin\gamma} \cdot W + \dfrac{(Q_4+Q_7)(Q_6-Q_4)-Q_6\cdot Q_7}{-(Q_6-Q_4)+Q_7}$ |
| $P_5 \div P_6$ | $H_o = \dfrac{-Q_3-Q_2}{-(Q_3+Q_1)+(Q_1-Q_2)} \cdot \dfrac{\sin\alpha_t}{\sin\gamma} \cdot W + \dfrac{-Q_2(Q_3+Q_1)-Q_3(Q_1-Q_2)}{-(Q_3+Q_1)+(Q_1-Q_2)}$ <br> $= \dfrac{-Q_2(Q_3+Q_1)-Q_3(Q_1-Q_2)}{-(Q_3+Q_2)}$ | $P_7 \div P_8$ | $H_u = \dfrac{-Q_3+Q_6}{-(Q_3+Q_1)+(Q_6-Q_4)} \cdot \dfrac{\sin\alpha_t}{\sin\gamma} \cdot W + \dfrac{Q_6\cdot(Q_3+Q_1)-Q_3\cdot(Q_6-Q_4)}{-(Q_3+Q_1)+(Q_6-Q_4)}$ <br> $= \sin^2\gamma \cdot \dfrac{\sin\alpha_t}{\sin\gamma} \cdot W + \dfrac{Q_6\cdot(Q_3+Q_1)-Q_3\cdot(Q_6-Q_4)}{-(Q_3+Q_1)+(Q_6-Q_4)}$ |

**Patentansprüche**

1. Verfahren zum Steuern von Grösse und Lage der Hubbewegung einer im Teilwälzverfahren arbeitenden Zahnflankenschleifmaschine beim Schleifen eines schrägverzahnten Zahnrades mit einem doppelkegelförmigen Schleifwerkzeug oder einem Paar kegelförmiger Schleifwerkzeuge, die hubweise längs der Zahnflanken hin- und herbewegbar sind, wobei die Hubbewegung entlang den Kontaktlinien zwischen Werkzeug und Werkstück mit je dem erforderlichen Überlauf am oberen und unteren Umkehrpunkt innerhalb eines Schleifpolygons ausgeführt wird und in Abhängigkeit von Messwerten der Wälzbewegung und augenblicklichen Lage des Schleifwerkzeugs oder -werkzeugpaares der zu schleifenden Zahnflanke gesteuert wird, dadurch gekennzeichnet, dass
- aus den Verzahnungsdaten ein die Hubgrenzen bestimmendes Schleif-Soll-Polygon nach den Tabellen C und D gebildet wird,
- der Arbeitspunkt des Schleifwerkzeugs oder -werkzeugpaares in kurzen Zeitabständen aus Messungen der jeweiligen Wälz- und Hubstellung der Maschine ermittelt wird,
- der Abstand dieses Arbeitspunktes von der in Hubrichtung folgenden Hubgrenze bestimmt wird,
- und die Hubbewegung bezüglich Weg und Geschwindigkeit so gesteuert wird, dass sie jeweils an den vom Schleif-Soll-Polygon bestimmten Hubgrenzen umkehrt;
mit den Formeln

Tabelle C
Fall b>b'

| Abschn. | Obere Schleifhubbegrenzung $H_o$ |
|---|---|
| $P_0 - P_1$ | $H_0 = \dfrac{Q_2 - Q_1}{Q_2 - Q_1} \cdot \dfrac{\sin \alpha_t}{\sin \gamma} \cdot W + \dfrac{Q_1 \cdot (Q_2 - Q_1)}{Q_2 - Q_1}$ <br><br> $= \dfrac{\sin \alpha_t}{\sin \gamma} \cdot W + Q_1$ |
| $P_1 \div P_2$ | $H_0 = \dfrac{(Q_4 + Q_7) - Q_2}{Q_7 - (Q_2 - Q_1)} \cdot \dfrac{\sin \alpha_t}{\sin \gamma} \cdot W + \dfrac{Q_2 \cdot Q_7 - (Q_4 + Q_7)(Q_2 - Q_1)}{Q_7 - (Q_2 - Q_1)}$ <br><br> $= \sin^2 \gamma \cdot \dfrac{\sin \alpha_t}{\sin \gamma} \cdot W + \dfrac{Q_2 \cdot Q_7 - (Q_4 + Q_7)(Q_2 - Q_1)}{Q_7 - (Q_2 - Q_1)}$ |
| $P_2 \div P_3$ | $H_0 = \dfrac{Q_6 - (Q_4 + Q_7)}{(Q_6 - Q_4) - Q_7} \cdot \dfrac{\sin \alpha_t}{\sin \gamma} \cdot W + \dfrac{(Q_4 + Q_7)(Q_6 - Q_4) - Q_6 \cdot Q_7}{(Q_6 - Q_4) - Q_7}$ <br><br> $= \dfrac{\sin \alpha_t}{\sin \gamma} \cdot W + \dfrac{(Q_4 + Q_7)(Q_6 - Q_4) - Q_6 \cdot Q_7}{(Q_6 - Q_4) - Q_7}$ |
| $P_3 \div P_4$ | $H_0 = \dfrac{Q_3 - Q_6}{(Q_3 + Q_1) - (Q_6 - Q_4)} \cdot \dfrac{\sin \alpha_t}{\sin \gamma} \cdot W + \dfrac{Q_6(Q_3 + Q_1) - Q_3(Q_6 - Q_4)}{(Q_3 + Q_1) - (Q_6 - Q_4)}$ <br><br> $= \sin^2 \gamma \cdot \dfrac{\sin \alpha_t}{\sin \gamma} \cdot W + \dfrac{Q_6(Q_3 + Q_1) - Q_3(Q_6 - Q_4)}{(Q_3 + Q_1) - (Q_6 - Q_4)}$ |
| $P_0 \div P_8$ | $H_0 = \dfrac{-Q_3 - Q_1}{-(Q_3 + Q_1)} \cdot \dfrac{\sin \alpha_t}{\sin \gamma} \cdot W + \dfrac{-Q_1(Q_3 + Q_1)}{-(Q_3 + Q_1)}$ <br><br> $= \dfrac{\sin \alpha_t}{\sin \gamma} \cdot W + Q_1$ |

Tabelle C
Fall b>b′

| Abschn. | Untere Schleifhubbegrenzung $H_u$ |
|---|---|
| $P_\varphi \div P_4$ | $H_u = \dfrac{\Theta_3 + Q_1}{Q_3 + Q_1} \cdot \dfrac{\sin\alpha_t}{\sin\gamma} \cdot W + \dfrac{-\Theta_1(Q_3 + \Theta_1)}{Q_3 + Q_1}$ <br><br> $= \dfrac{\sin\alpha_t}{\sin\gamma} \cdot W - Q_1$ |
| $P_\varphi \div P_5$ | $H_u = \dfrac{-\Theta_2 + Q_1}{-(Q_2 - Q_1)} \cdot \dfrac{\sin\alpha_t}{\sin\gamma} \cdot W + \dfrac{Q_1(Q_2 - Q_1)}{-(Q_2 - \Theta_1)}$ <br><br> $= \dfrac{\sin\alpha_t}{\sin\gamma} \cdot W - Q_1$ |
| $P_5 \div P_6$ | $H_u = \dfrac{-(Q_4 + Q_7) + Q_2}{-Q_7 + (Q_2 - Q_1)} \cdot \dfrac{\sin\alpha_t}{\sin\gamma} \cdot W + \dfrac{Q_2 \cdot Q_7 - (Q_4 + Q_7)(Q_2 - Q_1)}{-Q_7 + (Q_2 - Q_1)}$ <br><br> $= \sin^2\gamma \cdot \dfrac{\sin\alpha_t}{\sin\gamma} \cdot W + \dfrac{Q_2 \cdot Q_7 - (Q_4 + Q_7)(Q_2 - Q_1)}{-Q_7 + (Q_2 - Q_1)}$ |
| $P_6 \div P_7$ | $H_u = \dfrac{-Q_6 + (Q_4 + Q_7)}{-(Q_6 - \Theta_4) + Q_7} \cdot \dfrac{\sin\alpha_t}{\sin\gamma} \cdot W + \dfrac{(Q_4 + Q_7)(Q_6 - Q_4) - Q_6 \cdot Q_7}{-(Q_6 - Q_4) + Q_7}$ <br><br> $= \dfrac{\sin\alpha_t}{\sin\gamma} \cdot W + \dfrac{(Q_4 + Q_7)(Q_6 - Q_4) - \Theta_6 \cdot Q_7}{-(Q_6 - Q_4) + Q_7}$ |
| $P_7 \div P_8$ | $H_u = \dfrac{-\Theta_3 + Q_6}{-(Q_3 + Q_1) + (Q_6 - Q_4)} \cdot \dfrac{\sin\alpha_t}{\sin\gamma} \cdot W + \dfrac{Q_6 \cdot (Q_3 + Q_1) - Q_3(Q_6 - Q_4)}{-(Q_3 + Q_1) + (Q_6 - Q_4)}$ <br><br> $= \sin^2\gamma \cdot \dfrac{\sin\alpha_t}{\sin\gamma} \cdot W + \dfrac{Q_6 \cdot (Q_3 + Q_1) - Q_3(Q_6 - Q_4)}{-(Q_3 + Q_1) + (Q_6 - Q_4)}$ |

**Tabelle D**
**Fall b < b′**

| Abschn | Obere Schleifhubbegrenzung $H_o$ |
|---|---|
| $P_0 \div P_2$ | $$H_o = \frac{(Q_4+Q_7)-[Q_2+(Q_1-Q_2)\sin^2\gamma]}{Q_7} + \frac{[Q_2+(Q_1-Q_2)\sin^2\gamma]\cdot Q_7}{Q_7}$$ $$= \sin^2\gamma \cdot \frac{\sin\alpha_t}{\sin\gamma}\cdot W + [Q_2+(Q_1-Q_2)\sin^2\gamma]$$ |
| $P_2 \div P_3$ | $$H_o = \frac{Q_6-(Q_4+Q_7)}{(Q_6-Q_4)-Q_7}\cdot\frac{\sin\alpha_t}{\sin\gamma}\cdot W + \frac{(Q_4+Q_7)(Q_6-Q_4)-Q_6\cdot Q_7}{(Q_6-Q_4)-Q_7}$$ $$= \frac{\sin\alpha_t}{\sin\gamma}\cdot W + \frac{(Q_4+Q_7)(Q_6-Q_4)-Q_6\cdot Q_7}{(Q_6-Q_4)-Q_7}$$ |
| $P_3 \div P_4$ | $$H_o = \frac{Q_3-Q_6}{(Q_3+Q_1)-(Q_6-Q_4)}\cdot\frac{\sin\alpha_t}{\sin\gamma}\cdot W + \frac{Q_6\cdot(Q_3+Q_1)-Q_3\cdot(Q_6-Q_4)}{(Q_3+Q_1)-(Q_6-Q_4)}$$ $$= \sin^2\gamma \cdot \frac{\sin\alpha_t}{\sin\gamma}\cdot W + \frac{Q_6\cdot(Q_3+Q_1)-Q_3\cdot(Q_6-Q_4)}{(Q_3+Q_1)-(Q_6-Q_4)}$$ |
| $P_0 \div P_5$ | $$H_o = \frac{Q_2-[Q_2+(Q_1-Q_2)\sin^2\gamma]}{-(Q_1-Q_2)}\cdot\frac{\sin\alpha_t}{\sin\gamma}\cdot W + \frac{-[Q_2+(Q_1-Q_2)\sin^2\gamma](Q_1-Q_2)}{-(Q_1-Q_2)}$$ $$= \sin^2\gamma \cdot \frac{\sin\alpha_t}{\sin\gamma}\cdot W + [Q_2+(Q_1-Q_2)\sin^2\gamma]$$ |
| $P_5 \div P_8$ | $$H_o = \frac{-Q_3-Q_2}{-(Q_3+Q_1)+(Q_1-Q_2)}\cdot\frac{\sin\alpha_t}{\sin\gamma}\cdot W + \frac{-Q_2(Q_3+Q_1)-Q_3(Q_1-Q_2)}{-(Q_3+Q_1)+(Q_1-Q_2)}$$ $$= \frac{\sin\alpha_t}{\sin\gamma}\cdot W + \frac{-Q_2(Q_3+Q_1)-Q_3(Q_1-Q_2)}{-(Q_3+Q_2)}$$ |

Tabelle D

Fall $b < b'$

| Abschn. | Untere Schleifhubbegrenzung $H_u$ |
|---|---|
| $P_0 \div P_1$ | $H_u = \dfrac{-Q_2 + [Q_2 + (Q_1-Q_2)\sin^2\gamma]}{(Q_1 - Q_2)} \cdot \dfrac{\sin\alpha_t}{\sin\gamma} \cdot W + \dfrac{-[Q_2 + (Q_1-Q_2)\sin^2\gamma](Q_1-Q_2)}{(Q_1 - Q_2)}$ <br><br> $= \sin^2\gamma \cdot \dfrac{\sin\alpha_t}{\sin\gamma} \cdot W - [Q_2 + (Q_1-Q_2)\cdot\sin^2\gamma]$ |
| $P_1 \div P_4$ | $H_u = \dfrac{Q_3 + Q_2}{(Q_3+Q_1)-(Q_1-Q_2)} \cdot \dfrac{\sin\alpha_t}{\sin\gamma} \cdot W + \dfrac{-Q_2(Q_3+Q_1)-Q_3(Q_1-Q_2)}{(Q_3+Q_1)-(Q_1-Q_2)}$ <br><br> $= \dfrac{\sin\alpha_t}{\sin\gamma} \cdot W + \dfrac{-Q_2(Q_3+Q_1)-Q_3(Q_1-Q_2)}{Q_3+Q_2}$ |
| $P_0 \div P_6$ | $H_u = \dfrac{-(Q_4+Q_7)+[Q_2+(Q_1-Q_2)\sin^2\gamma]}{Q_7} \cdot \dfrac{\sin\alpha_t}{\sin\gamma} \cdot W + \dfrac{-[Q_2+(Q_1-Q_2)\sin^2\gamma]\cdot Q_7}{Q_7}$ <br><br> $= \sin^2\gamma \cdot \dfrac{\sin\alpha_t}{\sin\gamma} \cdot W - [Q_2 + (Q_1-Q_2)\cdot\sin^2\gamma]$ |
| $P_6 \div P_7$ | $H_u = \dfrac{-Q_6 + (Q_4+Q_7)}{-(Q_6-Q_4)+Q_7} \cdot \dfrac{\sin\alpha_t}{\sin\gamma} \cdot W + \dfrac{(Q_4+Q_7)(Q_6-Q_4)-Q_6\cdot Q_7}{-(Q_6-Q_4)+Q_7}$ <br><br> $= \dfrac{\sin\alpha_t}{\sin\gamma} \cdot W + \dfrac{(Q_4+Q_7)(Q_6-Q_4)-Q_6\cdot Q_7}{-(Q_6-Q_4)+Q_7}$ |
| $P_7 \div P_8$ | $H_u = \dfrac{-Q_3 + Q_6}{-(Q_3+Q_1)+(Q_6-Q_4)} \cdot \dfrac{\sin\alpha_t}{\sin\gamma} \cdot W + \dfrac{Q_6(Q_3+Q_1)-Q_3\cdot(Q_6-Q_4)}{-(Q_3+Q_1)+(Q_6-Q_4)}$ <br><br> $= \sin^2\gamma \cdot \dfrac{\sin\alpha_t}{\sin\gamma} \cdot W + \dfrac{Q_6\cdot(Q_3+Q_1)-Q_3\cdot(Q_6-Q_4)}{-(Q_3+Q_1)+(Q_6-Q_4)}$ |

wobei bedeuten:

$P_0$ Koordinatenursprung im W-H-h-Koordinaten-System, wobei die W-H-Ebene in der Wälzebene liegt, wobei in der Normalprojektion zwei benachbarten Flanken 1 und 2 die Projektion der Punkte $P_{01}$ und $P_{02}$ mit $P_0$ zusammenfällt.

$P_{01}$, $P_{02}$, ... Durchstosspunkt der Normalen auf die Bezugszahnstangenflanken vom Koordinatenursprung als Wälzpunkt in der Symmetriestellung durch die Flanke 1 bzw. 2.

$P_1$, $P_2$, $P_3$, ... Stützpunkte des Hubgrenzpolygons

$Q_1$, $Q_2$, $Q_3$, ... Abstände von $P_0$ der Austrittspunk-te der Schleifscheibe aus der Zahnflankenlinie in der Normalprojektion zweier benachbarter Flanken (Schnittpunkt der Erzeugenden oder deren Verlängerung mit den Kopf- bzw. Fussflankenlinien).

W Wälzweg

H Schleifhub

h Zahnkopfhöhe (allgemein)

$H_o$ obere Schleifhubbegrenzung

$H_u$ untere Schleifhubbegrenzung

b Zahnbreite

b' kritische Zahnbreite

t Eingriffswinkel im Stirnschnitt

**Claims**

1. A method of controlling the magnitude and position of the stroke movement in a tooth-flank grinding machine working by the generating method with indexing control during the grinding of a helical gear-wheel with a double tapered grinding tool or a pair of tapered grinding tools which can be reciprocated in strokes along the tooth flanks, the stroke movement being executed within a grinding polygon along the contact lines between tool and workpiece with the necessary over-run at each of the upper and lower reversing points and being controlled depending on measured values of the generating roll motion and instantaneous position of the grinding tool or pair of grinding tools of the tooth flank to be ground, characterised in that

– a desired grinding polygon determining the stroke limits is formed from the tooth data in accordance with Tables (C) and (D),
– the working point of the grinding tool or pair of grinding tools is determined at short intervals of time from measurements of the particular generating position and stroke position of the machine,
– the distance of this working point from the stroke limit following in the stroke direction is determined,
– and the stroke movement is controlled with regard to travel and speed so that it is reversed at each of the stroke limits determined by the desired grinding polygon,

With the formulae

Table C
Case b > b′

| Section | Upper grinding stroke limitation $H_o$ |
|---|---|
| $P_0 - P_1$ | $H_o = \dfrac{Q_2 - Q_1}{Q_2 - Q_1} \cdot \dfrac{\sin\alpha_t}{\sin\gamma} \cdot W + \dfrac{Q_1 \cdot (Q_2 - Q_1)}{Q_2 - Q_1}$ <br><br> $= \dfrac{\sin\alpha_t}{\sin\gamma} \cdot W + Q_1$ |
| $P_1 \div P_2$ | $H_o = \dfrac{(Q_4 + Q_7) - Q_2}{Q_7 - (Q_2 - Q_1)} \cdot \dfrac{\sin\alpha_t}{\sin\gamma} \cdot W + \dfrac{Q_2 \cdot Q_7 - (Q_4 + Q_7)(Q_2 - Q_1)}{Q_7 - (Q_2 - Q_1)}$ <br><br> $= \sin^2\gamma \cdot \dfrac{\sin\alpha_t}{\sin\gamma} \cdot W + \dfrac{Q_2 \cdot Q_7 - (Q_4 + Q_7)(Q_2 - Q_1)}{Q_7 - (Q_2 - Q_1)}$ |
| $P_2 \div P_3$ | $H_o = \dfrac{Q_6 - (Q_4 + Q_7)}{(Q_6 - Q_4) - Q_7} \cdot \dfrac{\sin\alpha_t}{\sin\gamma} \cdot W + \dfrac{(Q_4 + Q_7)(Q_6 - Q_4) - Q_6 \cdot Q_7}{(Q_6 - Q_4) - Q_7}$ <br><br> $= \dfrac{\sin\alpha_t}{\sin\gamma} \cdot W + \dfrac{(Q_4 + Q_7)(Q_6 - Q_4) - Q_6 \cdot Q_7}{(Q_6 - Q_4) - Q_7}$ |
| $P_3 \div P_4$ | $H_o = \dfrac{Q_3 - Q_6}{(Q_3 + Q_1) - (Q_6 - Q_4)} \cdot \dfrac{\sin\alpha_t}{\sin\gamma} \cdot W + \dfrac{Q_6(Q_3 + Q_1) - Q_3(Q_6 - Q_4)}{(Q_3 + Q_1) - (Q_6 - Q_4)}$ <br><br> $= \sin^2\gamma \cdot \dfrac{\sin\alpha_t}{\sin\gamma} \cdot W + \dfrac{Q_6(Q_3 + Q_1) - Q_3(Q_6 - Q_4)}{(Q_3 + Q_1) - (Q_6 - Q_4)}$ |
| $P_0 \div P_8$ | $H_o = \dfrac{-Q_3 - Q_1}{-(Q_3 + Q_1)} \cdot \dfrac{\sin\alpha_t}{\sin\gamma} \cdot W + \dfrac{-Q_1(Q_3 + Q_1)}{-(Q_3 + Q_1)}$ <br><br> $= \dfrac{\sin\alpha_t}{\sin\gamma} \cdot W + Q_1$ |

Table C
Case b > b′

| Section | Lower grinding stroke limitation $H_u$ |
|---|---|
| $P_9 \div P_4$ | $H_u = \dfrac{Q_3 + Q_1}{Q_3 + Q_1} \cdot \dfrac{\sin\alpha_t}{\sin\gamma} \cdot W + \dfrac{-Q_1(Q_3 + Q_1)}{Q_3 + Q_1}$ $= \dfrac{\sin\alpha_t}{\sin\gamma} \cdot W - Q_1$ |
| $P_9 \div P_5$ | $H_u = \dfrac{-Q_2 + Q_1}{-(Q_2 - Q_1)} \cdot \dfrac{\sin\alpha_t}{\sin\gamma} \cdot W + \dfrac{Q_1(Q_2 - Q_1)}{-(Q_2 - Q_1)}$ $= \dfrac{\sin\alpha_t}{\sin\gamma} \cdot W - Q_1$ |
| $P_5 \div P_6$ | $H_u = \dfrac{-(Q_4 + Q_7) + Q_2}{-Q_7 + (Q_2 - Q_1)} \cdot \dfrac{\sin\alpha_t}{\sin\gamma} \cdot W + \dfrac{Q_2 \cdot Q_7 - (Q_4 + Q_7)(Q_2 - Q_1)}{-Q_7 + (Q_2 - Q_1)}$ $= \sin^2\gamma \cdot \dfrac{\sin\alpha_t}{\sin\gamma} \cdot W + \dfrac{Q_2 \cdot Q_7 - (Q_4 + Q_7)(Q_2 - Q_1)}{-Q_7 + (Q_2 - Q_1)}$ |
| $P_6 \div P_7$ | $H_u = \dfrac{-Q_6 + (Q_4 + Q_7)}{-(Q_6 - Q_4) + Q_7} \cdot \dfrac{\sin\alpha_t}{\sin\gamma} \cdot W + \dfrac{(Q_4 + Q_7)(Q_6 - Q_4) - Q_6 \cdot Q_7}{-(Q_6 - Q_4) + Q_7}$ $= \dfrac{\sin\alpha_t}{\sin\gamma} \cdot W + \dfrac{(Q_4 + Q_7)(Q_6 - Q_4) - Q_6 \cdot Q_7}{-(Q_6 - Q_4) + Q_7}$ |
| $P_7 \div P_8$ | $H_u = \dfrac{-Q_3 + Q_6}{-(Q_3 + Q_1) + (Q_6 - Q_4)} \cdot \dfrac{\sin\alpha_t}{\sin\gamma} \cdot W + \dfrac{Q_6 \cdot (Q_3 + Q_1) - Q_3(Q_6 - Q_4)}{-(Q_3 + Q_1) + (Q_6 - Q_4)}$ $= \sin^2\gamma \cdot \dfrac{\sin\alpha_t}{\sin\gamma} \cdot W + \dfrac{Q_6 \cdot (Q_3 + Q_1) - Q_3(Q_6 - Q_4)}{-(Q_3 + Q_1) + (Q_6 - Q_4)}$ |

Table D
Case b < b'

| Section | Upper grinding stroke limitation $H_o$ |
|---|---|
| $P_1 \div P_2$ | $$H_o = \frac{(Q_4+Q_7)-[Q_2+(Q_1-Q_2)\sin^2\gamma]}{Q_7} + \frac{[Q_2+(Q_1-Q_2)\sin^2\gamma]\cdot Q_7}{Q_7}$$ $$= \sin^2\gamma \cdot \frac{\sin\alpha_t}{\sin\gamma}\cdot W + \left[Q_2+(Q_1-Q_2)\sin^2\gamma\right]$$ |
| $P_2 \div P_3$ | $$H_o = \frac{Q_6-(Q_4+Q_7)}{(Q_6-Q_4)-Q_7}\cdot\frac{\sin\alpha_t}{\sin\gamma}\cdot W + \frac{(Q_4+Q_7)(Q_6-Q_4)-Q_6\cdot Q_7}{(Q_6-Q_4)-Q_7}$$ $$= \frac{\sin\alpha_t}{\sin\gamma}\cdot W + \frac{(Q_4+Q_7)(Q_6-Q_4)-Q_6\cdot Q_7}{(Q_6-Q_4)-Q_7}$$ |
| $P_3 \div P_4$ | $$H_o = \frac{Q_3-Q_6}{(Q_3+Q_1)-(Q_6-Q_4)}\cdot\frac{\sin\alpha_t}{\sin\gamma}\cdot W + \frac{Q_6\cdot(Q_3+Q_1)-Q_3\cdot(Q_6-Q_4)}{(Q_3+Q_1)-(Q_6-Q_4)}$$ $$= \sin^2\gamma \cdot \frac{\sin\alpha_t}{\sin\gamma}\cdot W + \frac{Q_6\cdot(Q_3+Q_1)-Q_3\cdot(Q_6-Q_4)}{(Q_3+Q_1)-(Q_6-Q_4)}$$ |
| $P_1 \div P_5$ | $$H_o = \frac{Q_2-[Q_2+(Q_1-Q_2)\sin^2\gamma]}{-(Q_1-Q_2)}\cdot\frac{\sin\alpha_t}{\sin\gamma}\cdot W + \frac{-[Q_2+(Q_1-Q_2)\sin^2\gamma](Q_1-Q_2)}{-(Q_1-Q_2)}$$ $$= \sin^2\gamma \cdot \frac{\sin\alpha_t}{\sin\gamma}\cdot W + \left[Q_2+(Q_1-Q_2)\sin^2\gamma\right]$$ |
| $P_5 \div P_8$ | $$H_o = \frac{-Q_3-Q_2}{-(Q_3+Q_1)+(Q_1-Q_2)}\cdot\frac{\sin\alpha_t}{\sin\gamma}\cdot W + \frac{-Q_2(Q_3+Q_1)-Q_3(Q_1-Q_2)}{-(Q_3+Q_1)+(Q_1-Q_2)}$$ $$= \frac{\sin\alpha_t}{\sin\gamma}\cdot W + \frac{-Q_2(Q_3+Q_1)-Q_3(Q_1-Q_2)}{-(Q_3+Q_2)}$$ |

## Table D
### Case b < b′

| Section | Lower grinding stroke limitation    $H_u$ |
|---|---|
| $P_{\emptyset} \div P_1$ | $H_u = \dfrac{-Q_2 + [Q_2 + (Q_1 - Q_2)\sin^2\gamma]}{(Q_1 - Q_2)} \cdot \dfrac{\sin\alpha_t}{\sin\gamma} \cdot W + \dfrac{-[Q_2 + (Q_1 - Q_2)\sin^2\gamma](Q_1 - Q_2)}{(Q_1 - Q_2)}$ <br><br> $= \sin^2\gamma \cdot \dfrac{\sin\alpha_t}{\sin\gamma} \cdot W - [Q_2 + (Q_1 - Q_2)\cdot\sin^2\gamma]$ |
| $P_1 \div P_4$ | $H_u = \dfrac{Q_3 + Q_2}{(Q_3 + Q_1) - (Q_1 - Q_2)} \cdot \dfrac{\sin\alpha_t}{\sin\gamma} \cdot W + \dfrac{-Q_2(Q_3 + Q_1) - Q_3(Q_1 - Q_2)}{(Q_3 + Q_1) - (Q_1 - Q_2)}$ <br><br> $= \dfrac{\sin\alpha_t}{\sin\gamma} \cdot W + \dfrac{-Q_2(Q_3 + Q_1) - Q_3(Q_1 - Q_2)}{Q_3 + Q_2}$ |
| $P_{\emptyset} \div P_6$ | $H_u = \dfrac{-(Q_4 + Q_7) + [Q_2 + (Q_1 - Q_2)\sin^2\gamma]}{Q_7} \cdot \dfrac{\sin\alpha_t}{\sin\gamma} \cdot W + \dfrac{-[Q_2 + (Q_1 - Q_2)\sin^2\gamma]\cdot Q_7}{Q_7}$ <br><br> $= \sin^2\gamma \cdot \dfrac{\sin\alpha_t}{\sin\gamma} \cdot W - [Q_2 + (Q_1 - Q_2)\cdot\sin^2\gamma]$ |
| $P_6 \div P_7$ | $H_u = \dfrac{-Q_6 + (Q_4 + Q_7)}{-(Q_6 - Q_4) + Q_7} \cdot \dfrac{\sin\alpha_t}{\sin\gamma} \cdot W + \dfrac{(Q_4 + Q_7)(Q_6 - Q_4) - Q_6\cdot Q_7}{-(Q_6 - Q_4) + Q_7}$ <br><br> $= \dfrac{\sin\alpha_t}{\sin\gamma} \cdot W + \dfrac{(Q_4 + Q_7)(Q_6 - Q_4) - Q_6\cdot Q_7}{-(Q_6 - Q_4) + Q_7}$ |
| $P_7 \div P_8$ | $H_u = \dfrac{-Q_3 + Q_6}{-(Q_3 + Q_1) + (Q_6 - Q_4)} \cdot \dfrac{\sin\alpha_t}{\sin\gamma} \cdot W + \dfrac{Q_6(Q_3 + Q_1) - Q_3\cdot(Q_6 - Q_4)}{-(Q_3 + Q_1) + (Q_6 - Q_4)}$ <br><br> $= \sin^2\gamma \cdot \dfrac{\sin\alpha_t}{\sin\gamma} \cdot W + \dfrac{Q_6\cdot(Q_3 + Q_1) - Q_3\cdot(Q_6 - Q_4)}{-(Q_3 + Q_1) + (Q_6 - Q_4)}$ |

in which:

$P_0$ is coordinate origin in the W-H-h-coordinate system, the W-H-plane lying in the generating plane and, in the normal projection of two adjacent flanks 1 and 2, the projection of the points $P_{01}$ and $P_{02}$ coinciding with $P_0$.

$P_{01}$, $P_{02}$, ... are the point of intersection of the normals on the reference flank ranks from the coordinate origin as generating point in the position of symmetry through the flanks 1 or 2 respectively.

$P_1$, $P_2$, $P_3$, ... are supporting points of the stroke limiting polygon.

$Q_1$, $Q_2$, $Q_3$, ... are distances from $P_0$ of the points of exit of the grinding wheel from the tooth flank line in the normal projection of two adjacent flanks (point of intersection of the generatrices or their extension with the addendum flank lines or dedendum flank lines).

W is generating path
H is grinding stroke
h is addendum (in general)
$H_o$ is upper grinding stroke limitation
$H_u$ is lower grinding stroke limitation
b is tooth width
b′ is critical tooth width
t is transverse angle of action

γ is angle between flank contact line and root line

2. A method as claimed in claim 1, characterised in that the desired grinding polygon is formed from eight angles.

**Revendications**

1. Procédé permettant de commander l'amplitude et la position du mouvement de rectification ou coupe d'une machine à rectifier les profils de dents travaillant suivant le procédé par génération et division, par rectification d'une roue à denture hélicoïdale à l'aide d'un outil de rectification, biconique ou d'une paire d'outils de rectification coniques qui peuvent être déplacés suivant un mouvement alternatif et par courses successives, le long des profils de dents, du type selon lequel on exécute le mouvement d'avance à l'intérieur d'un polygone de rectification, le long de la ligne de contact entre l'outil et la pièce avec à chaque fois le dépassement nécessaire à l'endroit du point d'inversion supérieure et à l'endroit du point d'inversion inférieure et on commande ce mouvement de rectification en fonction des valeurs mesurées pour le mouvement de génération et pour la position instantanée de l'outil ou de la paire d'outiles de rectification sur le profil de dent à rectifier, caractérisé en ce que:

– à partir des données concernant la denture on construit un polygone nominal de rectification définissant les limites de course conformément aux tableaux $C_1$, $C_2$, $D_1$ et $D_2$ représentés aux pages 21, 22, 23, 24, sur lesquelles les formules des tableaux $C_1$ et $C_2$ (pages 21 et 22) concernent le cas b supérieur à b' et les Tableaux $D_1$ et $D_2$ (pages 23 et 24) concernent le cas b inférieur à b', la première colonne des quatre tableaux définissant les différents segments de polygone, tandis que la seconde colonne définit la limite supérieure de la course de meulage $H_o$ pour les tableaux $C_1$ et $D_1$ (pages 21 et 22) ou la limite inférieure de course de meulage $H_u$ pour les tableaux $C_2$ et $D_2$ (pages 23 et 24),

– le point de travail de l'outil ou paire d'outils de rectification est transmis à la machine à de courts intervalles de temps, à partir de mesures des positions de génération et de rectification effectuées à ce moment,

– on détermine la distance de ce point de travail par rapport à la limite de course qui suit suivant la direction de rectification,

– et on commande le mouvement de rectification en ce qui concerne sa trajectoire et sa vitesse de manière qu'il retourne à chaque fois aux limites de course déterminées par le polygone de rectification, les symboles figurant sur les tableaux ayant les significations suivantes:

$P_0$ Origine des coordonnées dans le système de coordonnées W-H-h, le plan W-H se trouvant dans le plan de génération, tandis que, dans la projection normale de deux profils voisins 1 et 2, la projection des points $P_{01}$ et $P_{02}$ coïncide avec $P_0$.

$P_{01}$, $P_{02}$ ... Point de rencontre des perpendiculaires menées aux profils de crémaillère théoretique à partir de l'origine des coordonnées servant de point primitif situé dans la position de symétrie entre les profils 1 et 2.

$P_{01}$, $P_{02}$, $P_{03}$ ... Sommets du polygone de limite de course.

$Q_1$, $Q_2$, $Q_3$ ... Distances, par rapport à $P_0$, des points de la meule de rectification correspondant à la sortie de la ligne de profil de dent pour la projection perpendiculaire de deux profils voisins (point d'intersection de la génératrice ou de son prolongement avec la ligne de flanc de creux ou la ligne de flanc de saillie).

W Course de génération
H Avance de rectification
h Saillie de la dent (d'une manière générale)
$H_o$ Limite supérieure d'avance de rectification
$H_u$ Limite inférieure d'avance de rectification
b Largeur de dent
b' Largeur de dent critique
t Angle de pression
γ Angle entre la ligne de contact de profil et la ligne de base.

Avec les formules:

Tableau C
Cas b > b′

| Section | Limite supérieure d'avance de rectification $H_0$ |
|---|---|
| $P_\emptyset - P_1$ | $H_0 = \dfrac{Q_2 - Q_1}{Q_2 - Q_1} \cdot \dfrac{\sin\alpha_t}{\sin\gamma} \cdot W + \dfrac{Q_1 \cdot (Q_2 - Q_1)}{Q_2 - Q_1}$ <br><br> $= \dfrac{\sin\alpha_t}{\sin\gamma} \cdot W + Q_1$ |
| $P_1 \div P_2$ | $H_0 = \dfrac{(Q_4 + Q_7) - Q_2}{Q_7 - (Q_2 - Q_1)} \cdot \dfrac{\sin\alpha_t}{\sin\gamma} \cdot W + \dfrac{Q_2 \cdot Q_7 - (Q_4 + Q_7)(Q_2 - Q_1)}{Q_7 - (Q_2 - Q_1)}$ <br><br> $= \sin^2\gamma \cdot \dfrac{\sin\alpha_t}{\sin\gamma} \cdot W + \dfrac{Q_2 \cdot Q_7 - (Q_4 + Q_7)(Q_2 - Q_1)}{Q_7 - (Q_2 - Q_1)}$ |
| $P_2 \div P_3$ | $H_0 = \dfrac{Q_6 - (Q_4 + Q_7)}{(Q_6 - Q_4) - Q_7} \cdot \dfrac{\sin\alpha_t}{\sin\gamma} \cdot W + \dfrac{(Q_4 + Q_7)(Q_6 - Q_4) - Q_6 \cdot Q_7}{(Q_6 - Q_4) - Q_7}$ <br><br> $= \dfrac{\sin\alpha_t}{\sin\gamma} \cdot W + \dfrac{(Q_4 + Q_7)(Q_6 - Q_4) - Q_6 \cdot Q_7}{(Q_6 - Q_4) - Q_7}$ |
| $P_3 \div P_4$ | $H_0 = \dfrac{Q_3 - Q_6}{(Q_3 + Q_1) - (Q_6 - Q_4)} \cdot \dfrac{\sin\alpha_t}{\sin\gamma} \cdot W + \dfrac{Q_6(Q_3 + Q_1) - Q_3(Q_6 - Q_4)}{(Q_3 + Q_1) - (Q_6 - Q_4)}$ <br><br> $= \sin^2\gamma \cdot \dfrac{\sin\alpha_t}{\sin\gamma} \cdot W + \dfrac{Q_6(Q_3 + Q_1) - Q_3(Q_6 - Q_4)}{(Q_3 + Q_1) - (Q_6 - Q_4)}$ |
| $P_\emptyset \div P_8$ | $H_0 = \dfrac{-Q_3 - Q_1}{-(Q_3 + Q_1)} \cdot \dfrac{\sin\alpha_t}{\sin\gamma} \cdot W + \dfrac{-Q_1(Q_3 + Q_1)}{-(Q_3 + Q_1)}$ <br><br> $= \dfrac{\sin\alpha_t}{\sin\gamma} \cdot W + Q_1$ |

Tableau C
Cas b > b′

| Section | Limite inférieure d'avance de rectification $H_u$ |
|---------|---------------------------------------------------|
| $P_9 \div P_4$ | $H_u = \dfrac{\Theta_3 + \Theta_1}{\Theta_3 + \Theta_1} \cdot \dfrac{\sin\alpha_t}{\sin\gamma} \cdot W + \dfrac{-\Theta_1(\Theta_3 + \Theta_1)}{\Theta_3 + \Theta_1}$ $= \dfrac{\sin\alpha_t}{\sin\gamma} \cdot W - \Theta_1$ |
| $P_9 \div P_5$ | $H_u = \dfrac{-\Theta_2 + \Theta_1}{-(\Theta_2 - \Theta_1)} \cdot \dfrac{\sin\alpha_1}{\sin\gamma} \cdot W + \dfrac{\Theta_1(\Theta_2 - \Theta_1)}{-(\Theta_2 - \Theta_1)}$ $= \dfrac{\sin\alpha_t}{\sin\gamma} \cdot W - \Theta_1$ |
| $P_5 \div P_6$ | $H_u = \dfrac{-(\Theta_4 + \Theta_7) + \Theta_2}{-\Theta_7 + (\Theta_2 - \Theta_1)} \cdot \dfrac{\sin\alpha_t}{\sin\gamma} \cdot W + \dfrac{\Theta_2 \cdot \Theta_7 - (\Theta_4 + \Theta_7)(\Theta_2 - \Theta_1)}{-\Theta_7 + (\Theta_2 - \Theta_1)}$ $= \sin^2\gamma \cdot \dfrac{\sin\alpha_t}{\sin\gamma} \cdot W + \dfrac{\Theta_2 \cdot \Theta_7 - (\Theta_4 + \Theta_7)(\Theta_2 - \Theta_1)}{-\Theta_7 + (\Theta_2 - \Theta_1)}$ |
| $P_6 \div P_7$ | $H_u = \dfrac{-\Theta_6 + (\Theta_4 + \Theta_7)}{-(\Theta_6 - \Theta_4) + \Theta_7} \cdot \dfrac{\sin\alpha_t}{\sin\gamma} \cdot W + \dfrac{(\Theta_4 + \Theta_7)(\Theta_6 - \Theta_4) - \Theta_6 \cdot \Theta_7}{-(\Theta_6 - \Theta_4) + \Theta_7}$ $= \dfrac{\sin\alpha_t}{\sin\gamma} \cdot W + \dfrac{(\Theta_4 + \Theta_7)(\Theta_6 - \Theta_4) - \Theta_6 \cdot \Theta_7}{-(\Theta_6 - \Theta_4) + \Theta_7}$ |
| $P_7 \div P_8$ | $H_u = \dfrac{-\Theta_3 + \Theta_6}{-(\Theta_3 + \Theta_1) + (\Theta_6 - \Theta_4)} \cdot \dfrac{\sin\alpha_1}{\sin\gamma} \cdot W + \dfrac{\Theta_6 \cdot (\Theta_3 + \Theta_1) - \Theta_3(\Theta_6 - \Theta_4)}{-(\Theta_3 + \Theta_1) + (\Theta_6 - \Theta_4)}$ $= \sin^2\gamma \cdot \dfrac{\sin\alpha_t}{\sin\gamma} \cdot W + \dfrac{\Theta_6 \cdot (\Theta_3 + \Theta_1) - \Theta_3(\Theta_6 - \Theta_4)}{-(\Theta_3 + \Theta_1) + (\Theta_6 - \Theta_4)}$ |

Tableau D
Cas b < b′

| Section | Limite supérieure d'avance de rectification $H_O$ |
|---------|---------------------------------------------------|
| $P_\beta \div P_2$ | $$H_O = \frac{(Q_4+Q_7)-[Q_2+(Q_1-Q_2)\sin^2\gamma]}{Q_7} + \frac{[Q_2+(Q_1-Q_2)\sin^2\gamma]\cdot Q_7}{Q_7}$$ $$= \sin^2\gamma \cdot \frac{\sin\alpha_t}{\sin\gamma}\cdot W + [Q_2+(Q_1-Q_2)\sin^2\gamma]$$ |
| $P_2 \div P_3$ | $$H_O = \frac{Q_6-(Q_4+Q_7)}{(Q_6-Q_4)-Q_7}\cdot\frac{\sin\alpha_t}{\sin\gamma}\cdot W + \frac{(Q_4+Q_7)(Q_6-Q_4)-Q_6\cdot Q_7}{(Q_6-Q_4)-Q_7}$$ $$= \frac{\sin\alpha_t}{\sin\gamma}\cdot W + \frac{(Q_4+Q_7)(Q_6-Q_4)-Q_6\cdot Q_7}{(Q_6-Q_4)-Q_7}$$ |
| $P_3 \div P_4$ | $$H_O = \frac{Q_3-Q_6}{(Q_3+Q_1)-(Q_6-Q_4)}\cdot\frac{\sin\alpha_t}{\sin\gamma}\cdot W + \frac{Q_6\cdot(Q_3+Q_1)-Q_3\cdot(Q_6-Q_4)}{(Q_3+Q_1)-(Q_6-Q_4)}$$ $$= \sin^2\gamma\cdot\frac{\sin\alpha_t}{\sin\gamma}\cdot W + \frac{Q_6\cdot(Q_3+Q_1)-Q_3\cdot(Q_6-Q_4)}{(Q_3+Q_1)-(Q_6-Q_4)}$$ |
| $P_\beta \div P_5$ | $$H_O = \frac{Q_2-[Q_2+(Q_1-Q_2)\sin^2\gamma]}{-(Q_1-Q_2)}\cdot\frac{\sin\alpha_t}{\sin\gamma}\cdot W + \frac{-[Q_2+(Q_1-Q_2)\sin^2\gamma](Q_1-Q_2)}{-(Q_1-Q_2)}$$ $$= \sin^2\gamma\cdot\frac{\sin\alpha_t}{\sin\gamma}\cdot W + [Q_2+(Q_1-Q_2)\sin^2\gamma]$$ |
| $P_5 \div P_8$ | $$H_O = \frac{-Q_3-Q_2}{-(Q_3+Q_1)+(Q_1-Q_2)}\cdot\frac{\sin\alpha_t}{\sin\gamma}\cdot W + \frac{-Q_2(Q_3+Q_1)-Q_3(Q_1-Q_2)}{-(Q_3+Q_1)+(Q_1-Q_2)}$$ $$= \frac{\sin\alpha_t}{\sin\gamma}\cdot W + \frac{-Q_2\cdot(Q_3+Q_1)-Q_3(Q_1-Q_2)}{-(Q_3+Q_2)}$$ |

**Tableau D**
**Cas b < b′**

| Section | Limite inférieure d'avance de rectification $H_u$ |
|---|---|
| $P_0 \div P_1$ | $$H_u = \frac{-\Theta_2 + [\Theta_2 + (\Theta_1 - \Theta_2)\sin^2\gamma]}{(\Theta_1 - \Theta_2)} \cdot \frac{\sin\alpha_t}{\sin\gamma} \cdot W + \frac{-[\Theta_2 + (\Theta_1 - \Theta_2)\sin^2\gamma](\Theta_1 - \Theta_2)}{(\Theta_1 - \Theta_2)}$$ $$= \sin^2\gamma \cdot \frac{\sin\alpha_t}{\sin\gamma} \cdot W - [\Theta_2 + (\Theta_1 - \Theta_2) \cdot \sin^2\gamma]$$ |
| $P_1 \div P_4$ | $$H_u = \frac{\Theta_3 + \Theta_2}{(\Theta_3 + \Theta_1) - (\Theta_1 - \Theta_2)} \cdot \frac{\sin\alpha_t}{\sin\gamma} \cdot W + \frac{-\Theta_2(\Theta_3 + \Theta_1) - \Theta_3(\Theta_1 - \Theta_2)}{(\Theta_3 + \Theta_1) - (\Theta_1 - \Theta_2)}$$ $$= \frac{\sin\alpha_t}{\sin\gamma} \cdot W + \frac{-\Theta_2(\Theta_3 + \Theta_1) - \Theta_3(\Theta_1 - \Theta_2)}{\Theta_3 + \Theta_2}$$ |
| $P_0 \div P_6$ | $$H_u = \frac{-(\Theta_4 + \Theta_7) + [\Theta_2 + (\Theta_1 - \Theta_1)\sin^2\gamma]}{\Theta_7} \cdot \frac{\sin\alpha_t}{\sin\gamma} \cdot W + \frac{-[\Theta_2 + (\Theta_1 - \Theta_2)\sin^2\gamma] \cdot \Theta_7}{\Theta_7}$$ $$= \sin^2\gamma \cdot \frac{\sin\alpha_t}{\sin\gamma} \cdot W - [\Theta_2 + (\Theta_1 - \Theta_2) \cdot \sin^2\gamma]$$ |
| $P_6 \div P_7$ | $$H_u = \frac{-\Theta_6 + (\Theta_4 + \Theta_7)}{-(\Theta_6 - \Theta_4) + \Theta_7} \cdot \frac{\sin\alpha_t}{\sin\gamma} \cdot W + \frac{(\Theta_4 + \Theta_7)(\Theta_6 - \Theta_4) - \Theta_6 \cdot \Theta_7}{-(\Theta_6 - \Theta_4) + \Theta_7}$$ $$= \frac{\sin\alpha_t}{\sin\gamma} \cdot W + \frac{(\Theta_4 + \Theta_7)(\Theta_6 - \Theta_4) - \Theta_6 \cdot \Theta_7}{-(\Theta_6 - \Theta_4) + \Theta_7}$$ |
| $P_7 \div P_8$ | $$H_u = \frac{-\Theta_3 + \Theta_6}{-(\Theta_3 + \Theta_1) + (\Theta_6 - \Theta_4)} \cdot \frac{\sin\alpha_t}{\sin\gamma} \cdot W + \frac{\Theta_6(\Theta_3 + \Theta_1) - \Theta_3 \cdot (\Theta_6 - \Theta_4)}{-(\Theta_3 + \Theta_1) + (\Theta_6 - \Theta_4)}$$ $$= \sin^2\gamma \cdot \frac{\sin\alpha_t}{\sin\gamma} \cdot W + \frac{\Theta_6 \cdot (\Theta_3 + \Theta_1) - \Theta_3 \cdot (\Theta_6 - \Theta_4)}{-(\Theta_3 + \Theta_1) + (\Theta_6 - \Theta_4)}$$ |

2. Procédé suivant la revendication 1, caractérisé en ce que le polygone nominal de rectification est formé de huit sommets.

Fig. 1a

Fig. 1b

0 132 582

Fig. 2

Fig. 3

27

Fig. 4

Fig. 5

Fig. 6

## Fig. 7

## Fig. 8

Fig. 9

Fig. 10

Fig. 12

Fig. 11